(19) Europäisches Patentamt
European Patent Office
Office européen des brevets

(11) Veröffentlichungsnummer: **0 016 723**
**B2**

(12) # NEUE EUROPÄISCHE PATENTSCHRIFT

(45) Veröffentlichungstag der neuen Patentschrift: **16.09.87**

(51) Int. Cl.⁴: **C 08 K 5/34**, C 09 D 7/12, C 09 D 3/81, C 09 D 3/66, C 08 L 67/08, C 08 L 33/00

(21) Anmeldenummer: **80810049.9**

(22) Anmeldetag: **11.02.80**

(54) **Lichtstabilisierung von Zweischicht-Unilackierungen.**

(30) Priorität: **15.02.79 CH 1484/79**

(43) Veröffentlichungstag der Anmeldung: **01.10.80 Patentblatt 80/20**

(45) Bekanntmachung des Hinweises auf die Patenterteilung: **01.06.83 Patentblatt 83/22**

(45) Bekanntmachung des Hinweises auf die Entscheidung über den Einspruch: **16.09.87 Patentblatt 87/38**

(84) Benannte Vertragsstaaten: **BE CH DE FR GB IT NL**

(73) Patentinhaber: **CIBA-GEIGY AG, Klybeckstrasse 141, CH-4002 Basel (CH)**

(72) Erfinder: **Berner, Godwin, Dr., Oetlingerstrasse 2, CH-4057 Basel (CH)**

(74) Vertreter: **Zumstein, Fritz jun., Dr. et al, Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

(56) Entgegenhaltungen:
**EP - A - 0 002 753**
**EP - A - 0 006 213**
**EP - B - 0 006 213**
**DE - A - 1 935 382**
**DE - A - 2 415 818**
**DE - A - 2 418 540**
**DE - A - 2 612 314**
**DE - A - 2 623 422**
**DE - A - 2 820 419**
**JP - C - 52 053 492**
**US - A - 3 823 205**

**PATENTS ABSTRACTS OF JAPAN, Band 1, Nr. 91, 24. August 1977, Seite 1941C77**
**PATENTS ABSTRACTS OF JAPAN, Band 1, Nr. 13, 22. März 1977, Seite 733C77**
**H. Beyer, Lehrbuch der Organischen Chemie, 1961, S. 229, 230**

(56) Entgegenhaltungen: (Fortsetzung)
**Kunststoff Handbuch, Bd. I, Carl Hanser Verlag, München Wien 1975, S. 104**
**H. Kittel, Lehrbuch der Lacke und Beschichtungen, Bd. I/II, Verlag Colomb, Berlin, 1973, S. 735-742**
**F. Gugumus (Ciba-Geigy), Kunststoffe-Plastics 2, S. 11-16 (1975)**
**H. Gyslin (Ciba-Geigy), Kunststoffe 66 (10), S. 670-674 (1976)**
**Ciba-Geigy, Techn. Information Nr. 37327 /I/d zu Tinuvin 770, Sept. 75/Juli 77**
**Glasurit-Handbuch Lacke und Farben, Ausgabe 1984, S. 466-469, 538**

**Die Akte enthält technische Angaben, die nach dem Eingang der Anmeldung eingereicht wurden und die nicht in dieser Patentschrift enthalten sind.**

**EP 0 016 723 B2**

**Beschreibung**

Die vorliegende Erfindung befasst sich mit dem Stabilisieren von Zweischicht-Uni-Einbrennlackierungen auf der Basis von Acryl-, Alkyd- und Polyesterharzen gegen die Einwirkung von Licht durch den Zusatz von Polyalkylpiperidinderivaten sowie mit den so stabilisierten Lacken.

Es ist bereits aus den beiden Japanischen Patentanmeldungen Sho 52 132 050 und Sho 5 360 942 bekannt, dass Zweischicht-Unilackierungen mit üblichen UV-Absorbern stabilisiert werden können. Diese Stabilisatoren müssen aber, um eine gute Stabilisierung zu gewährleisten, in verhältnismässig hohen Konzentrationen verwendet werden und ausserdem besitzen sie meistens nicht die gewünschte Farblosigkeit die, wegen der häufig schwankenden Schichtstärken der Klarlacke, in der Praxis von grösster Bedeutung ist.

Typische Abbauerscheinungen in Zweischicht-Einbrennlackierungen, insbesondere Rissbildung, Blasenbildung und Delaminierung sollten erwartungsgemäss am besten durch UV-Absorber zu vermeiden sein. Es wurde nun aber überraschenderweise gefunden, dass bei Verwendung von Lichtschutzmitteln auf der Basis von Polyalkylpiperidinderivaten trotz fehlender Absorption im nahen UV-Bereich schon in wesentlich kleineren Konzentrationen eine ausgezeichnete Stabilisierung erreicht wird. Zudem ist durch die Polyalkylpiperidinderivate die erforderliche Farblosigkeit gewährleistet.

Es wurde bereits vorgeschlagen (JP-A 5 251 421 und 5 222 029) zur Stabilisierung von physikalisch trocknenden Lacken auf der Basis von Nitrocellulose und Acrylharz enthaltenden Bindemitteln diesen ein Gemisch eines Acrylnitrilderivates und eines sterisch gehinderten Piperidinderivates zuzusetzen. Hierbei wird die hauptsächlich durch die Nitrocellulose verursachte Vergilbung im UV-Licht verhindert bzw. vermindert. Daraus kann man nicht auf eine analoge Wirkung bei für Zweischichtlackierungen verwendete Einbrennlacke schliessen, die frei von Nitrocellulose sind.

Die vorliegende Erfindung betrifft daher die Verwendung von 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von Zweischicht-Uni-Einbrennlackierungen auf der Basis von Acryl-, Alkyd- oder Polyesterharze, die gegebenenfalls mit Melamin/Formaldehydharzen, Epoxydharzen oder Polyisocyanaten vernetzt werden, gegen die Einwirkung von Licht, wobei die Stabilisatoren nur in den unpigmentierten Decklack eingearbeitet werden.

Die erfindungsgemäss zu verwendenden 2,2,6-6-Tetraalkylpiperidinverbindungen sind allgemein bekannt und werden bereits gegen Lichtabbau eingesetzt. Es handelt sich dabei vorzugsweise um Verbindungen die eine Gruppe der Formel (I)

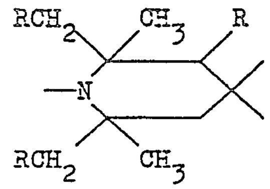

(I)

enthalten, worin R Wasserstoff oder Methyl bedeutet.

Zu den erfindungsgemäss zu verwendenden Lichtschutzmitteln gehören insbesondere folgende Verbindungsklassen:

a) Lichtschutzmittel der Formel (II)

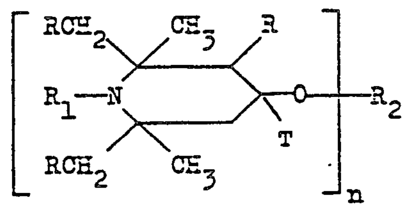

(II)

worin n die Zahlen 1–4, vorzugsweise 1 oder 2 bedeutet, T Wasserstoff oder $-CONH_2$ ist, R die für Formel (I) angegebene Bedeutung hat, $R_1$ Wasserstoff, Oxyl, $C_1$–$C_{18}$ Alkyl, $C_3$–$C_8$ Alkenyl, $C_3$–$C_8$ Alkinyl, $C_7$–$C_{12}$ Aralkyl, $C_1$–$C_8$ Alkanoyl, $C_3$–$C_5$ Alkenoyl, Glycidyl, eine Gruppe $-CH_2CH(OH)-Z$, worin Z Wasserstoff, Methyl, Aethyl oder Phenyl ist, wobei $R_1$ vorzugsweise Wasserstoff, $C_1$–$C_{12}$ Alkyl, Allyl, Benzyl, Acetyl, Acryloyl ist und $R_2$, wenn n = 1, Wasserstoff, gegebenenfalls durch ein oder mehrere Sauerstoffatome unterbrochenes $C_1$–$C_{18}$ Alkyl, Cyanäthyl, Benzyl, Glycidyl, einen einwertigen Rest einer aliphatischen, cycloaliphatischen, araliphatischen, aromatischen oder heterocyclischen Carbonsäure, Carbaminsäure oder Phosphor enthaltenden Säure oder einen einwertigen Silylrest, vorzugsweise einen Rest einer aliphatischen Carbonsäure mit 2–18 C-Atomen, einer cycloaliphatischen Carbonsäure mit 5–12 C-Atomen oder einer aromatischen Carbonsäure mit 7–15 C-Atomen, wenn n = 2, $C_1$–$C_{12}$ Alkylen, $C_4$–$C_{12}$ Alkenylen, Xylylen, einen zweiwertigen Rest einer aliphatischen cycloaliphatischen, araliphatischen, aromatischen oder heterocyclischen Dicarbonsäure, Dicarbaminsäure oder Phosphor enthaltenden Säure oder einen zweiwertigen Silylrest, vorzugsweise einen Rest einer aliphatischen Dicarbonsäure mit 2–36 C-Atomen, einer cycloaliphatischen oder aromatischen Dicarbonsäure mit 8–14 C-Atomen, einer aliphatischen, cycloaliphatischen oder aromatischen Dicarbaminsäure mit 8–14 C-Atomen, wenn n = 3, einen dreiwertigen Rest einer aliphatischen, cycloaliphatischen, aromatischen oder heterocyclischen Tricarbonsäure, einer aromatischen Tricarbaminsäure oder einer Phosphor enthaltenden Säure oder einen dreiwertigen Silylrest, wenn n = 4, einen vierwertigen Rest einer aliphatischen, cycloaliphatischen oder aromatischen Tetracarbonsäure bedeutet.

Bedeuten etwaige Substituenten $C_1$–$C_{12}$ Alkyl, so stellen sie z.B. Methyl, Äthyl, n-Propyl, n-Butyl, sek.-Butyl, tert.-Butyl, n-Hexyl, n-Octyl, 2-Äthyl-hexyl, n-Nonyl, n-Decyl, n-Undecyl oder n-Dodecyl dar.

In der Bedeutung von $C_1$–$C_{18}$ Alkyl können $R_1$ oder $R_2$ z.B. die oben angeführten Gruppen und dazu noch beispielsweise n-Tridecyl, n-Tetradecyl, n-Hexadecyl oder n-Octadecyl darstellen.

Wenn $R_1$ $C_3$–$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R_1$ ist als $C_3$–$C_8$ Alkinyl bevorzugt Propargyl.

Als $C_7$–$C_{12}$ Aralkyl ist $R_1$ insbesondere Phenäthyl oder vor allem Benzyl.

$R_1$ ist als $C_1$–$C_8$ Alkanoyl beispielsweise Formyl, Propionyl, Butyryl, Octanoyl aber bevorzugt Acetyl und als $C_3$–$C_5$ Alkenoyl insbesondere Acrylolyl.

Bedeutet $R_2$ einen einwertigen Rest einer Carbonsäure, so stellt es beispielsweise einen Essigsäure-, Stearinsäure-, Salicylsäure-, Methacrylsäure-, Maleinsäure-, Benzoe- oder β-(3,5-Di-tert.-butyl-4-hydroxyphenyl)-propionsäurerest dar.

Bedeutet $R_2$ einen zweiwertigen Rest einer Dicarbonsäure, so stellt es beispielsweise einen Adipinsäure-, Suberinsäure-, Sebacinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R_2$ einen dreiwertigen Rest einer Tricarbonsäure dar, so bedeutet es z.B. einen Trimellithsäure- oder einen Nitrolitriessigsäurerest.

$R_2$ kann auch Reste von Di- und Tricarbonsäuren bedeuten, wie sie technisch durch Oligomerisation höherer ungesättigter Fettsäuren oder durch Diels-Alder Addition von Acrylsäure an Linolsäure hergestellt werden. Ferner kann $R_2$ auch Reste bedeuten, die durch Umsetzung von Mono-, Di- und Polyepoxiden wie z.B. Bisphenol A-diglycidyläther, Butandioldiglycidyläther, Trisglycidyl-isocyanurat, 1,3-Giglycidyl-4,4-dimethylhydantoin mit 4-Hydroxy-1,2,2,6,6-pentamethylpiperidin entstehen.

Stellt $R_2$ einen vierwertigen Rest einer Tetracarbonsäure dar, so bedeutet es z.B. eine Pyromellithsäurerest.

Bedeutet $R_2$ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für 2,2,6,6-Tetraalkylpiperidin-Lichtschutzmittel dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Äthyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) 1-Benzyl-2,2,6,6-tetramethyl-4-piperidinylmaleinat
10) (Di-2,2,6,6-tetramethylpiperidin-4-yl)-adipat
11) (Di-2,2,6,6-tetramethylpiperidin-4-yl)-sebacat
12) (Di-1,2,3,6-tetramethyl-2,6-diäthyl-piperidin-4-yl)-sebacat
13) (Di-1-allyl-2,2,6,6-tetramethyl-piperidin-4-yl)-phthalat
14) 1-Propargyl-4-β-cyanoäthyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diäthyl-piperidin-4-yl)-ester
22) Hexan-1′,6′-bis-(4-carbamoyloxy-1-n-butyl-2,2,6,6-tetramethylpiperidin)
23) Toluol-2′,4′-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)-phosphat
28) Phenyl-[bis-(1,2,2,6,6-pentamethylpiperidin-4-yl)]-phosphonat
29) (Di-1,2,2,6,6-pentamethylpiperidin-4-yl)-sebacat
30) (Di-1-benzyl-2,2,6,6-tetramethylpiperidin-4-yl)-sebacat
31) (Di-1-allyl-2,2,6,6-tetramethylpiperidin-4-yl)-sebacat
31a) 2,2,6,6-Tetramethyl-4-hydroxy-4-carbamoyl-piperidin.

b) Lichtschutzmittel der Formel (III)

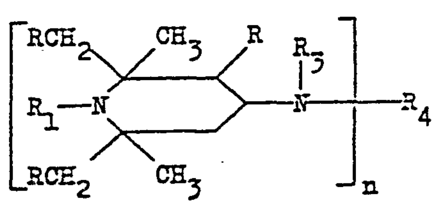

(III)

worin n die Zahlen 1 oder 2 bedeutet, R die für Formel I angegebene Bedeutung hat, $R_1$ die unter

a) angegebene Bedeutung hat, $R_3$ Wasserstoff, $C_1$–$C_{12}$ Alkyl, $C_5$–$C_7$ Cycloalkyl, $C_7$–$C_8$ Aralkyl, $C_2$–$C_{18}$ Alkanoyl, $C_3$–$C_5$ Alkenoyl, Benzoyl ist und $R_4$ wenn n = 1, Wasserstoff, $C_1$–$C_{18}$ Alkyl, $C_5$–$C_7$ Cycloalkyl, gegebenenfalls mit einer Cyano-, Carbonyl- oder Carbamidgruppe substituiertes $C_2$–$C_8$ Alkenyl, Glycidyl, eine Gruppe der Formel $-CH_2-CH(OH)-Z''$ oder der Formel $-CONH-Z''$ ist, worin Z″ Wasserstoff, Methyl oder Phenyl bedeutet; wenn n = 2, $C_2$–$C_{12}$ Alkylen, $C_6$–$C_{12}$ Arylen, Xylylen, eine $-CH_2-CH(OH)-CH_2$-Gruppe oder eine Gruppe $-CH_2-CH(OH)-CH_2-O-X-O-CH_2-CH(OH)-CH_2-$ bedeutet, worin X $C_2$–$C_{10}$ Alkylen, $C_6$–$C_{15}$ Arylen, $C_6$–$C_{12}$ Cycolalkylen ist, oder, vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure oder auch die Gruppe -CO- bedeuten kann, oder $R_3$ und $R_4$ zusammen, wenn n = 1, den Imidrest einer aliphatischen, cycloaliphatischen oder aromatischen 1,2- oder 1,3-Dicarbonsäure sein können.

Stellen etwaige Substituenten $C_1$–$C_{18}$ Alkyl dar, so haben sie die bereits unter a) angegebene Bedeutung.

Bedeuten etwaige Substituenten $C_5$–$C_7$ Cycloalkyl, so stellen sie insbesondere Cyclohexyl dar.

Als $C_7$–$C_8$ Aralkyl ist $R_3$ insbesondere Phenäthyl oder vor allem Benzyl.

$R_3$ ist als $C_2$–$C_{18}$ Alkanoyl beispielsweise Propionyl, Butyryl, Octanoyl, Dodecanoyl, Hexadecanoyl, Octadecanoyl aber bevorzugt Acetyl und als $C_3$–$C_5$ Alkenoyl insbesondere Acryloyl.

Bedeutet $R_4$ ein gegebenenfalls mit einer Cyano-, Carbonyl- oder Carbamidgruppe substituiertes $C_2$–$C_8$ Alkenyl, dann handelt es sich z.B. um 1-Propenyl, Allyl, Methallyl, 2-Butenyl, 2-Pentenyl, 2-Hexenyl, 2-Octenyl, 2,2-Dicyanovinyl, 1-Methyl-2-cyano-2-methoxycarbonyl-vinyl, 2,2-Diacetylaminovinyl.

Stellen etwaige Substituenten $C_2$–$C_{12}$ Alkylen dar, so handelt es sich z.B. um Äthylen, Propylen, 2,2-Dimethylpropylen, Tetramethylen, Hexamethylen, Octamethylen, Decamethylen oder Dodecamethylen.

Bedeuten etwaige Substituenten $C_6$–$C_{15}$ Arylen, so stellen sie z.B. o-, m- oder p-Phenylen, 1,4-Naphthylen oder 4,4′-Diphenylen dar.

Als $C_6$–$C_{12}$ Cycloalkylen ist X insbesondere Cyclohexylen.

Beispiele für 2,2,6,6-Tetraalkylpiperidin-Lichtschutzmittel dieser Klasse sind folgende Verbindungen:

32) N,N′-Bis-(2,2,6,6-tetramethylpiperidin-4-yl)-hexamethylen-1,6-diamin
33) N,N′-Bis-(2,2,6,6-tetramethylpiperidin-4-yl)-hexamethylen-1,6-diacetamid
34) 1-Acetyl-4-(N-cyclohexylacetamido)-2,2,6,6-tetramethylpiperidin
35) 4-Benzylamino-2,2,6,6-tetramethylpiperidin
36) N,N′-Bis-(2,2,6,6-tetramethylpiperidin-4-yl)-N,N′-dibutyl-adipamid
37) N,N′-Bis-(2,2,6,6-tetramethylpiperidin-4-yl)-N,N′-dicyclohexyl-(2-hydroxypropylen)
38) N,N′-Bis-(2,2,6,6-tetramethylpiperidin-4-yl)-p-xylylen-diamin
39) Die Verbindung der Formel

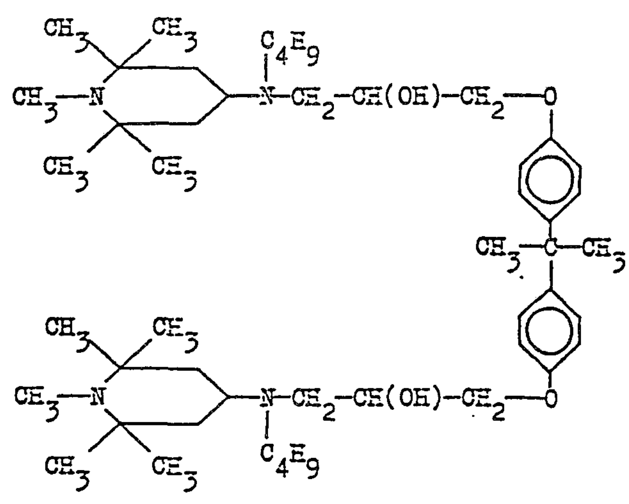

41) 4-(3-Methyl-4-hydroxy-5-tert.butyl-benzoesäureamido)-2,2,6,6-tetramethylpiperidin
42) 4-Methacrylamido-1,2,2,6,6-pentamethylpiperidin
43) α-Cyano-β-methyl-β-[N-(2,2,6,6-tetramethylpiperidin-4-yl)]-amino-acrylsäure-methylester.

c) Lichtschutzmittel der Formel (IV)

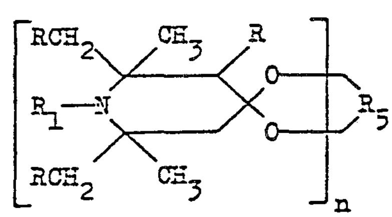

(IV)

worin n die Zahlen 1 oder 2 bedeutet, R die für Formel (I) angegebene Bedeutung hat, $R_1$ die unter a) angegebene Bedeutung hat und $R_5$, wenn n = 1, $C_2$–$C_8$ Alkylen oder Hydroxyalkylen, $C_4$–$C_{22}$ Acyloxyalkylen, wenn n = 2, die Gruppe $(-CH_2)_2C(CH_2-)_2$ bedeutet.

Bedeutet $R_5$ $C_2$–$C_8$ Alkylen oder Hydroxyalkylen, so stellt es beispielsweise Aethylen, 1-Methyläthylen, Propylen, 2-Aethyl-propylen, 2-Aethyl-2-hydroxymethylpropylen dar.

Als $C_4$–$C_{22}$ Acyloxyalkylen bedeutet $R_5$ z.B. 2-Äthyl-2-acetoxymethyl-propylen.

Bespiele für 2,2,6,6-Tetraalkylpiperidin-Lichtschutzmittel dieser Klasse sind folgende Verbindungen:

44) 9-Aza-8,8,10,10-tetramethyl-1,5-dioxaspiro [5.5] undecan
45) 9-Aza-8,8,10,10-tetramethyl-3-äthyl-1,5-dioxaspiro [5.5] decan
46) 8-Aza-2,7,7,8,9,9-hexamethyl-1,4-dioxaspiro [4.5] decan
47) 9-Aza-3-hydroxymethyl-3-äthyl-8,8,9,10,10-pentamethyl-1,5-dioxaspiro [5.5] undecan
48) 9-Aza-3-äthyl-3-acetoxymethyl-9-acetyl-8,8,10,10-tetramethyl-1,5-dioxaspiro [5.5] undecan
49) 2,2,6,6-Tetramethylpiperidin-4-spiro-2′-(1′,3′-dioxan)-5′-spiro-5″-(1″,3″-dioxan)-2″-spiro-4‴-(2‴,6‴-tetramethylpiperidin).

d) Lichtschutzmittel der Formeln (VA), (VB) und (VC)

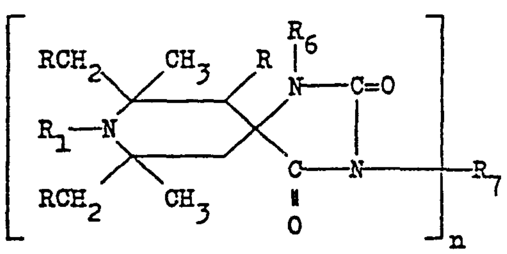
(VA)

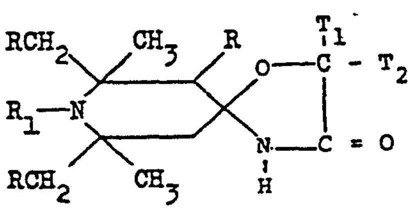
(VB)

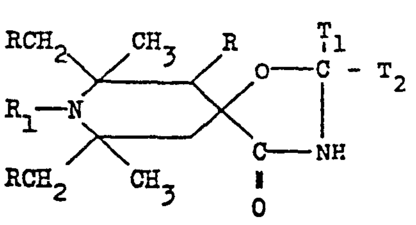
(VC)

worin n die Zahlen 1 oder 2 bedeutet, R die für Formel (I) angegebene Bedeutung hat, $R_1$ die unter a) angegebene Bedeutung hat, $R_6$ Wasserstoff, $C_1$–$C_{12}$ Alkyl, Allyl, Benzyl, Glycidyl, $C_2$–$C_6$ Alkoxyalkyl ist und $R_7$, wenn n = 1, Wasserstoff, $C_1$–$C_{12}$ Alkyl, $C_3$–$C_5$ Alkenyl, $C_7$–$C_9$ Aralkyl, $C_5$–$C_7$ Cycloalkyl, $C_2$–$C_4$ Hydroxyalkyl, $C_2$–$C_6$ Alkoxyalkyl, $C_6$–$C_{10}$ Aryl, Glycidyl, eine Gruppe der Formel $-(CH_2)_m$-COO-Q oder der Formel $-(CH_2)_m$-O-CO-Q, worin m 1 oder 2 und Q $C_1$–$C_{18}$ Alkyl oder Phenyl sind, wenn n = 2, $C_2$–$C_{12}$ Alkylen, $C_6$–$C_{12}$ Arylen, $C_4$–$C_{12}$ Alkenylen, eine Gruppe $-CH_2-CH(OH)-CH_2-O-X-O-CH_2-CH(OH)-CH_2-$, worin X $C_2$–$C_{10}$ Alkylen, $C_6$–$C_{15}$ Arylen, $C_6$–$C_{12}$ Cycloalkylen ist, oder eine Gruppe $-CH_2CH(OZ')CH_2-(OCH_2-CH(OZ')CH_2)_2-$ bedeutet, worin Z′ Wasserstoff, $C_1$–$C_{18}$ Alkyl, Allyl, Benzyl, $C_2$–$C_{12}$ Alkanoyl oder Benzoyl ist $T_1$ und $T_2$ unabhängig voneinander Wasserstoff, $C_1$–$C_{18}$ Alkyl oder gegebenenfalls durch Halogen oder $C_1$–$C_4$ Alkyl substituiertes $C_6$–$C_{10}$ Aryl oder $C_7$–$C_9$ Aralkyl bedeuten oder $T_1$ und $T_2$ zusammen mit dem sie bindenden C-Atom gegebenenfalls durch $C_1$–$C_4$ Alkyl substituiertes $C_5$–$C_7$ Cycloalkyl, Pyrrolidinyl oder Piperidinyl bilden.

Bedeuten etwaige Substituenten $C_1$–$C_{12}$ Alkyl, so stellen sie z.B. Methyl, Äthyl, n-Propyl, n-Butyl, sek.-Butyl, tert.-Butyl, n-Hexyl, n-Octyl, 2-Äthyl-hexyl, n-Nonyl, n-Decyl, n-Undecyl oder n-Dodecyl dar.

Etwaige Substituenten in der Bedeutung von $C_1$–$C_{18}$ Alkyl können z.B. die oben aufgeführten Gruppen und dazu noch beispielsweise n-Tridecyl, n-Tetradecyl, n-Hexadecyl oder n-Octadecyl darstellen.

Bedeuten etwaige Substituenten $C_2$–$C_6$ Alkoxyalkyl, so stellen sie z.B. Methoxymethyl, Äthoxymethyl, Propoxymethyl, tert.-Butoxymethyl, Äthoxyäthyl, Äthoxypropyl, n-Butoxyäthyl, tert.-Butoxyäthyl, Isopropoxyäthyl oder Propoxypropyl dar.

Stellt $R_7$ $C_3$–$C_5$ Alkenyl dar, so bedeutet es z.B. 1-Propenyl, Allyl, Methallyl, 2-Butenyl oder 2-Pentenyl.

Als $C_7$–$C_9$ Aralkyl sind $R_7$, $T_1$ und $T_2$ insbesondere Phenäthyl oder vor allem Benzyl und als $C_5$–$C_7$ Cycloalkyl ($T_1$ und $T_2$ zusammen mit dem sie bindenden C-Atom) insbesondere Cyclohexyl.

Bedeutet $R_7$ $C_2$–$C_4$ Hydroxyalkyl, so stellt es z.B. 2-Hydroxyäthyl, 2-Hydroxypropyl, 2-Hydroxybutyl oder 4-Hydroxybutyl dar.

Als $C_6$–$C_{10}$ Aryl bedeuten $R_7$, $T_1$ und $T_2$ insbesondere Phenyl, α- oder β-Naphthyl, die gegebenenfalls mit Halogen oder $C_1$–$C_4$ Alkyl substituiert sind.

Stellt $R_7$ $C_2$–$C_{12}$ Alkylen dar, so handelt es sich z.B. um Äthylen, Propylen, 2,2-Dimethylpropylen, Tetramethylen, Hexamethylen, Octamethylen, Decamethylen oder Dodecamethylen.

Als $C_4$–$C_{12}$ Alkenylen bedeutet $R_7$ insbesondere 2-Butenylen, 2-Pentenylen oder 3-Hexenylen.

Bedeutet $R_7$ $C_6$–$C_{12}$ Arylen, so stellt es beispielsweise o-, m- oder p-Phenylen, 1,4-Naphthylen oder 4,4′-Diphenylen dar.

Bedeutet Z′ $C_2$–$C_{12}$ Alkanoyl, so stellt es beispielsweise Propionyl, Butyryl, Octanoyl, Dodecanoyl aber bevorzugt Acetyl dar.

X hat als $C_2$–$C_{10}$ Alkylen, $C_6$–$C_{12}$ Arylen oder $C_6$–$C_{12}$ Cycloalkylen die unter b) angegebene Bedeutung.

Beispiele für 2,2,6,6-Tetraalkylpiperidin-Lichtschutzmittel dieser Klasse sind folgende Verbindungen.

50) 3-Benzyl-1,3,8-Triaza-7,7,9,9-tetramethylspiro [4.5] decan-2,4-dion
51) 3-n-Octyl-1,3,8,-triaza-7,7,9,9-tetramethylspiro [4.5] decan-2,4-dion
52) 3-Allyl-1,3,8-triaza-1,7,7,9,9-pentamethylspiro [4.5] decan-2,4-dion
53) 3-Glycidyl-1,3,8-triaza-7,7,8,9,9-pentamethylspiro [4.5] decan-2,4-dion
53a) 2-iso-Propyl-7,7,9,9-tetramethyl-1-oxa-3,8-diaza-4-oxo-spiro [4.5] decan
53b) 2-Butyl-7,7,9,9-tetramethyl-1-oxa-3,8-diaza-4-oxo-spiro [4.5] decan
53c) 2-Isoproyl-7,7,9,9-tetramethyl-1-oxa-4,8-diaza-3-oxo-spiro [4.5] decan
53d) 2-Butyl-7,7,9,9-tetramethyl-1-oxa-4,8-diaza-3-oxo-spiro [4.5] decan
oder die Verbindungen der folgenden Formeln:

54)
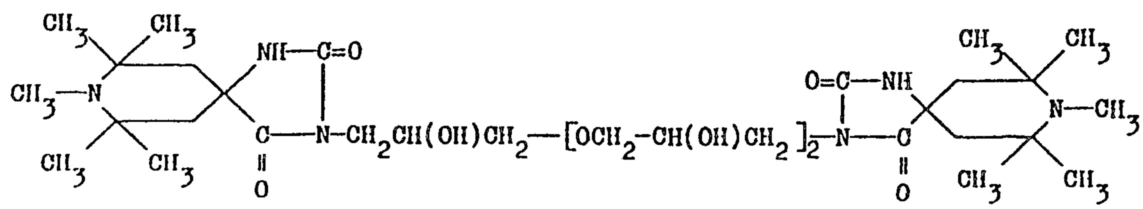

55)
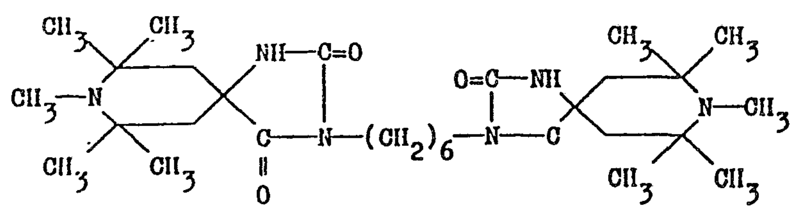

56)
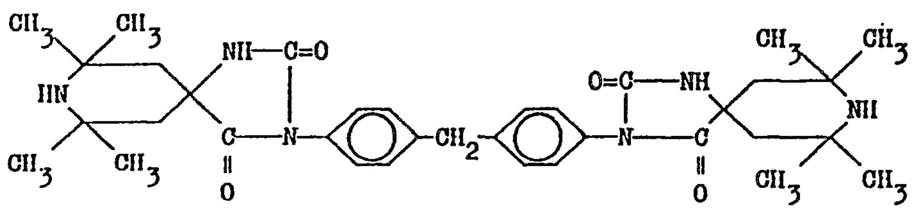

e) Lichtschutzmittel der Formel (VI)

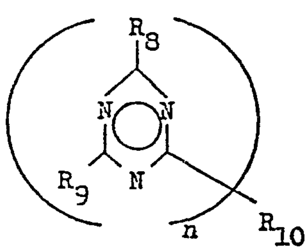

(VI)

worin n die Zahlen 1 oder 2 ist und $R_8$ eine Gruppe der Formel

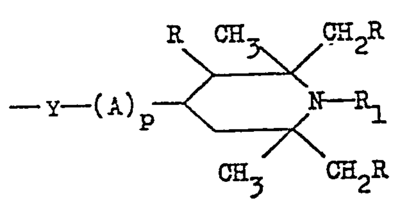

bedeutet, worin R die für Formel (I) angegebene Bedeutung hat, $R_1$ die unter a) angegebene Bedeutung hat, Y -O- oder $-NR_{11}-$ ist, A $C_2$-$C_6$ Alkylen oder $-(CH_2)_3-O-$ und p die Zahlen O oder 1 beuten, $R_9$ die Gruppen $R_8$, $NR_{11}R_{12}$, $-OR_{13}$, $-NHCH_2OR_{13}$ oder $-N(CH_2OR_{13})_2$ ist, $R_{10}$ wenn n = 1 die Gruppen $R_8$ oder $R_9$ und wenn n = 2 die Gruppe -Y-B-Y-, worin B gegebenenfalls durch $-N(R_{14})-$ unterbrochenes $C_2$-$C_6$ Alkylen bedeutet, $R_{11}$ $C_1$-$C_{12}$ Alkyl, Cyclohexyl, Benzyl oder $C_1$-$C_4$ Hydroxyalkyl oder eine Gruppe der Formel

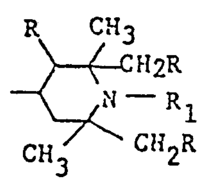

ist, $R_{12}$ $C_1$-$C_{12}$ Alkyl, Cyclohexyl, Benzyl, $C_1$-$C_4$ Hydroxyalkyl, $R_{13}$ Wasserstoff, $C_1$-$C_{12}$ Alkyl oder Phenyl und $R_{14}$ Wasserstoff, $C_1$-$C_{12}$ Alkyl, Cyclohexyl, Benzyl, Phenyl bedeuten oder $R_{11}$ und $R_{12}$ zusammen $C_4$-$C_5$ Alkylen oder Oxaalkylen sind oder auch $R_{11}$ und $R_{12}$ jeweils eine Gruppe der Formel

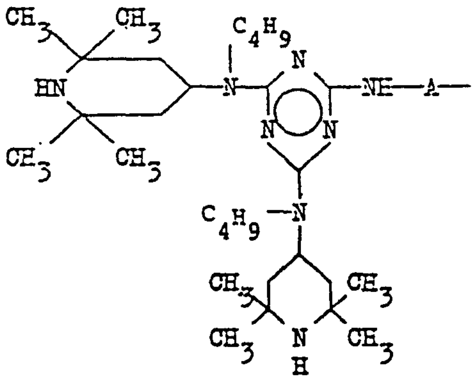

bedeuten.

Bedeuten etwaige Substituenten $C_1$–$C_{12}$ Alkyl, so stellen sie beispielsweise Methyl, Äthyl, n-Propyl, n-Butyl, sek.-Butyl, tert.-Butyl, n-Hexyl, n-Octyl, 2-Äthylhexyl, n-Nonyl, n-Decyl, n-Undecyl oder n-Dodecyl dar.

Bedeuten etwaige Substituenten $C_1$–$C_4$ Hydroxyalkyl, so stellen sie z.B. 2-Hydroxyäthyl, 2-Hydroxypropyl, 3-Hydroxypropyl, 2-Hydroxybutyl oer 4-Hydroxybutyl dar.

Bedeutet A $C_2$–$C_6$ Alkylen, so stellt es beispielsweise Äthylen, Propylen, 2,2-Dimethylpropylen, Tetramethylen oder Hexamethylen dar.

Stellen $R_{11}$ und $R_{12}$ zusammen $C_4$–$C_5$ Alkylen oder Oxaalkylen dar, so bedeutet dies z.B. Tetramethylen, Pentamethylen oder 3-Oxa-pentamethylen.

Beispiele für 2,2,6,6-Tetraalkylpiperidin-Lichtschutzmittel dieser Klasse sind die Verbindungen der folgenden Formeln:

57)

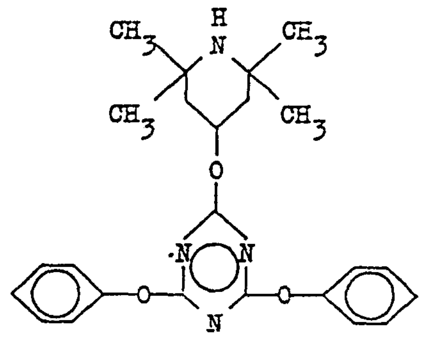

58)

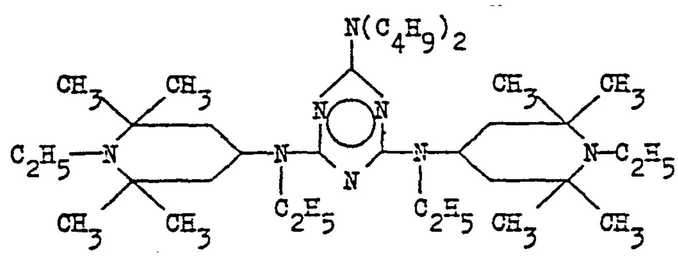

59)

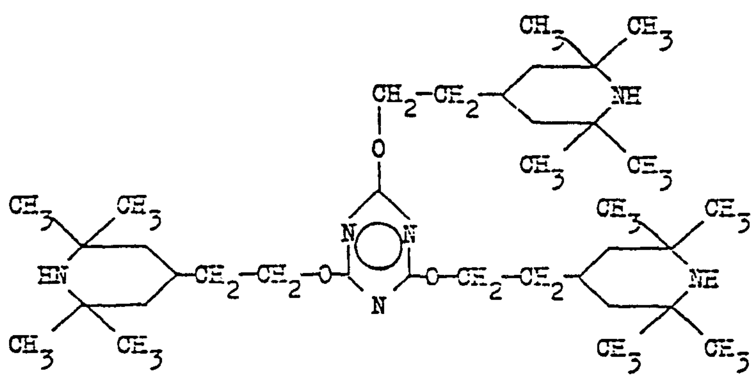

60)

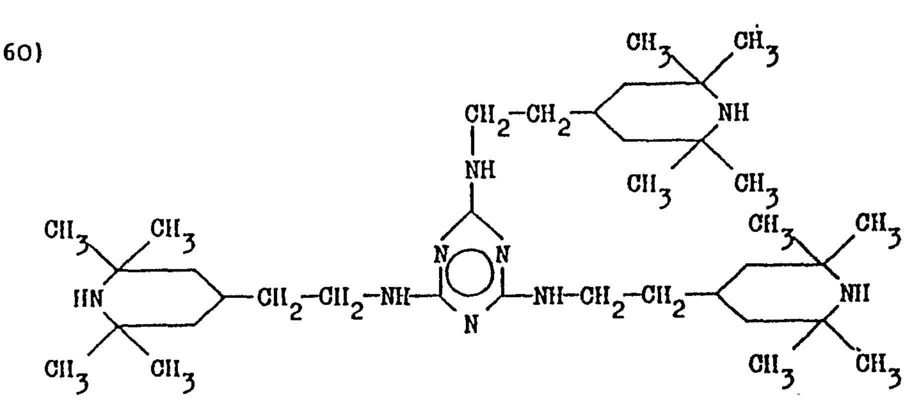

61)

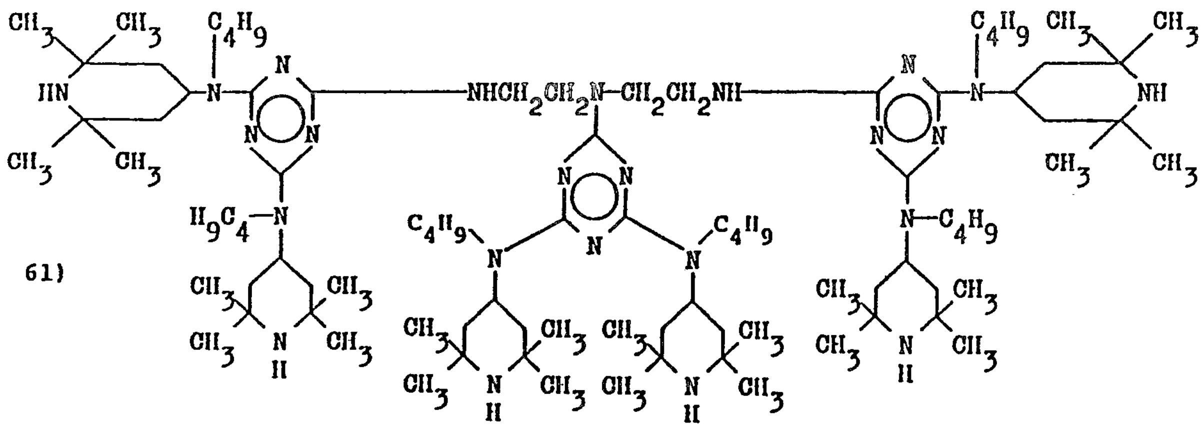

62)

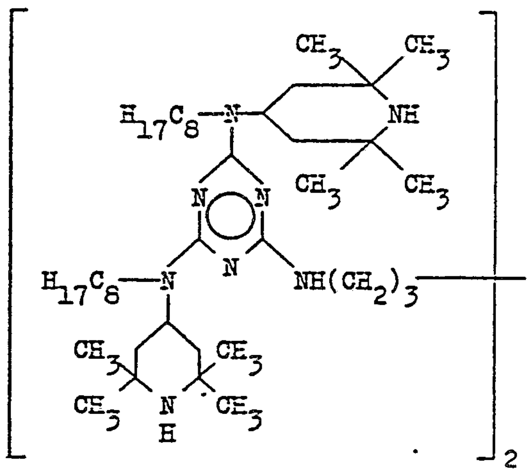

63)

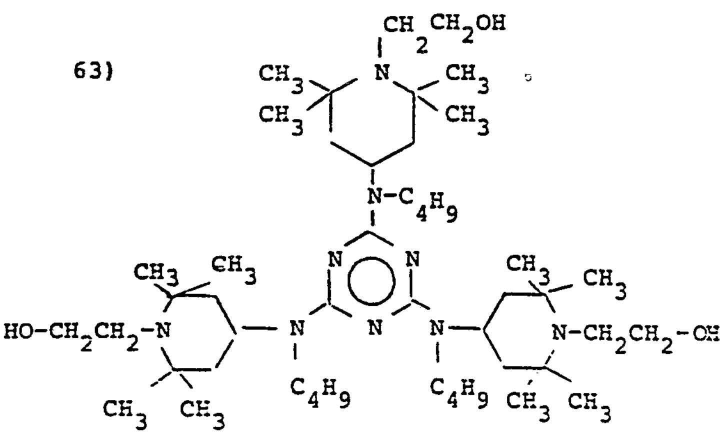

f) Lichtschutzmittel der Formel (VII)

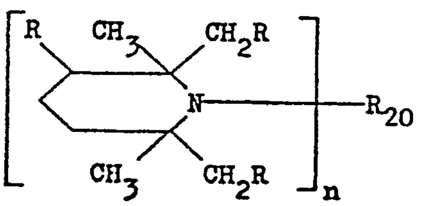

(VII)

worin n die Zahlen 1 oder 2 bedeutet, R die für Formel (I) angegebene Bedeutung hat und $R_{20}$, wenn n = 1, $C_4$–$C_{18}$ Alkyl, $C_7$–$C_{12}$ Aralkyl, die Gruppe $-CO-R_{15}$, $C_1$–$C_4$ Alkyl substituiert durch $-CN$, $-COOR_{16}$, $-OH$, $-OCOR_{17}$ bedeutet, wobei $R_{15}$ $C_1$–$C_{12}$ Alkyl, $C_2$–$C_4$ Alkenyl oder Phenyl, $R_{16}$ $C_1$–$C_{18}$ Alkyl, $R_{17}$ $C_1$–$C_{18}$ Alkyl, $C_2$–$C_{10}$ Alkenyl, Cyclohexyl, Benzyl oder $C_6$–$C_{10}$ Aryl sind oder, wenn n = 2, $R_{14}$ $C_4$–$C_{12}$ Alkylen, 2-Butenylen-1,4, Xylylen, die Gruppe $-(CH_2)_2-OOC-R_{18}-COO-(CH_2)_2-$ oder die Gruppe $-CH_2-OOC-R_{19}-COO-CH_2-$ ist, wobei $R_{18}$ $C_2$–$C_{10}$ Alkylen, Phenylen oder Cyclohexylen und $R_{19}$ $C_2$–$C_{10}$ Alkylen, Xylylen oder Cyclohexylen bedeuten.

Bedeuten etwaige Substituenten $C_1$–$C_{12}$ Alkyl, so stellen sie z.B. Methyl, Äthyl, n-Propyl, n-Butyl, sek.-Butyl, tert.-Butyl, n-Hexyl, n-Octyl, 2-Äthyl-hexyl, n-Nonyl, n-Decyl, n-Undecyl oder n-Dodecyl dar.

Etwaige Substituenten, die $C_1$–$C_{18}$ Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen $C_2$–$C_{10}$ Alkylen dar, so bedeuten sie beispielsweise Äthylen, Propylen, 2,2-Dimethylpropylen, Tetramethylen, Hexamethylen, Octamethylen oder Decamethylen.

$R_{14}$ bedeutet als $C_4$–$C_{18}$ Alkyl, z.B. n-Butyl, sek.-Butyl, tert.-Butyl, n-Hexyl, n-Octyl, 2-Äthyl-hexyl, 1,1-Dimethyl-2-tert.-butyläthyl, n-Nonyl, n-Decyl, n-Dodecyl, n-Tridecyl, n-Tetradecyl, n-Hexadecyl oder n-Octadecyl.

Bedeutet $R_{14}$ ein durch –CN substituiertes $C_1$–$C_4$ Alkyl, so stellt es beispielsweise Cyanomethyl, Cyanoäthyl, 3-Cyano-n-propyl, 4-Cyano-n-butyl dar.

Bedeutet $R_{14}$ $C_4$–$C_{12}$ Alkylen, so handelt es sich z.B. um 2,2-Dimethylpropylen, Tetramethylen, Hexamethylen, Octamethylen, Decamethylen oder Dodecamethylen.

Stellt $R_{14}$ $C_7$–$C_{12}$ Aralkyl dar, so bedeutet es insbesondere Phenäthyl, p-Methyl-benzyl oder vor allem Benzyl.

$R_{15}$ bedeutet als $C_2$–$C_4$ Alkenyl beispielsweise Vinyl, 1-Propenyl, Allyl, Methallyl, 2-Butenyl.

$R_{17}$ bedeutet als $C_2$–$C_{10}$ Alkenyl z.B. die für $R_{15}$ in der Bedeutung Alkenyl angeführten Gruppen und dazu noch beispielsweise Crotyl, 2-Hexenyl, 2-Octenyl oder 2-Decenyl.

Stellt $R_{17}$ $C_6$–$C_{10}$ Aryl dar, so bedeutet es beispielsweise gegebenenfalls in o- oder p-Stellung mit Methyl, Äthyl, Isopropyl, n-Butyl oder tert.-Butyl substituiertes Phenyl.

Beispiele für 2,2,6,6-Tetraalkylpiperidin-Lichtschutzmittel dieser Klasse sind folgende Verbindungen:

64) Bis-[β-(2,2,6,6-tetramethylpiperidino)-äthyl]-sebacat

65(α-(2,2,6,6-Tetramethyl-piperidino)-essigsäure-n-octylester

66) 1,4-Bis-(2,2,6,6-tetramethylpiperidino)-2-buten.

g) Lichtschutzmittel der Formel (VIII)

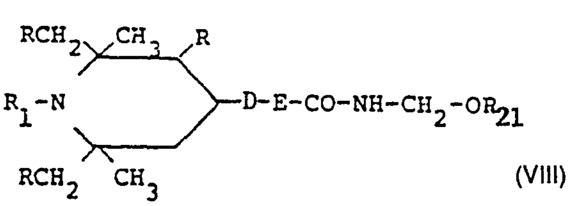

(VIII)

worin D $-N(R_{22})-$ oder $-O-$ ist, E $C_1$–$C_3$ Alkylen, die Gruppe $-CH_2-CH(R_{23})-O-$, worin $R_{23}$ Wasserstoff, Methyl oder Phenyl ist, die Gruppe $-(CH_2)_3-NH-$ oder eine Einfachbindung bedeutet, R Wasserstoff oder Methyl ist, $R_1$ die unter a) angegebene Bedeutung hat, $R_{21}$ Wasserstoff oder $C_1$–$C_{18}$ Alkyl bedeutet, $R_{22}$ Wasserstoff, $C_1$–$C_{18}$ Alkyl, $C_5$–$C_7$ Cycloalkyl, $C_7$–$C_{12}$ Aralkyl, Cyanäthyl, $C_6$–$C_{10}$ Aryl, die Gruppe $-CH_2-CH(R_{23})-OH$, worin $R_{23}$ die oben angegebene Bedeutung hat, eine Gruppe der Formel

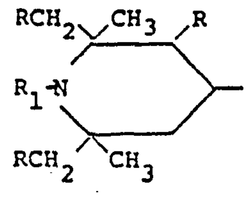

oder eine Gruppe der Formel

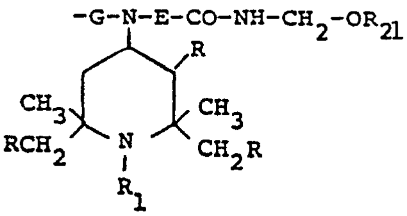

bedeutet, worin G $C_2$–$C_6$ Alkylen oder $C_6$–$C_{12}$ Arylen sein kann, oder $R_{22}$ eine Gruppe $-E-CO-NH-Ch_2OR_{21}$ ist.

Bedeuten etwaige Substituenten $C_1$–$C_{18}$ Alkyl, so stellen sie z.B. Methyl, Äthyl, n-Propyl, n-Butyl, sek.-Butyl, tert.-Butyl, n-Hexyl, n-Octyl, 2-Äthyl-hexyl, n-Nonyl, n-Decyl, n-Undecyl, n-Dodecyl, n-Tridecyl, n-Tetradecyl, n-Hexadecyl oder n-Octadecyl dar.

Stellen etwaige Substituenten $C_7$–$C_{12}$ Aralkyl dar, so bedeuten sie beispielsweise Phenäthyl oder insbesondere Benzyl.

Wenn $R_1$ $C_3$–$C_8$ Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

$R_1$ ist als $C_3$–$C_8$ Alkinyl bevorzugt Propargyl. Als $C_1$–$C_8$ Alkanoyl bedeutet $R_1$ beispielsweise Formyl, Propionyl, Butyryl, Octanoyl aber bevorzugt Acetyl und als $C_3$–$C_5$ Alkenoyl, insbesondere Acryloyl.

$R_{22}$ bedeutet als $C_5$–$C_7$ Cycloalkyl, insbesondere Cyclohexyl.

Als $C_6$–$C_{10}$ Aryl bedeutet $R_{22}$ insbesondere Phenyl α- oder β-Naphthyl, die gegebenenfalls mit Halogen oder $C_1$–$C_4$ Alkyl substituiert sind. E bedeutet als $C_1$–$C_3$ Alkylen z.B. Methylen, Äthylen oder Propylen.

G stellt als $C_2$–$C_6$ Alkylen beispielsweise Äthylen, Propylen, 2,2-Dimethylpropylen, Tetramethylen oder Hexamethylen und als $C_6$–$C_{12}$ Arylen o-, m- oder p-Phenylen, 1,4-Naphthylen oder 4,4'-Diphenylen dar.

Beispiele für 2,2,6,6-Tetraalkylpiperidin-Lichtschutzmittel dieser Klasse sind folgende Verbindungen:

67) N-Hydroxymethyl-N'-2,2,6,6-Tetramethylpiperidin-4-yl-harnstoff.

68) N-Methoxymethyl-N'-2,2,6,6-Tetramethylpiperidin-4-yl-harnstoff.

69) N-Methoxymethyl-N'-n-dodecyl-N'-2,2,6,6-Tetramethylpiperidin-4-yl-harnstoff.

70) O-(2,2,6,6-Tetramethylpiperidin-4-yl)-N-methoxymethyl-urethan.

h) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)-acrylamide und deren Copolymeren, die solche Reste enthalten.

Beispiele für 2,2,6,6-Tetraalkylpiperidin-Lichtschutzmittel dieser Klasse sind die Verbindungen der folgenden Formeln, wobei m die Zahlen 2-etwa 200 bedeutet.

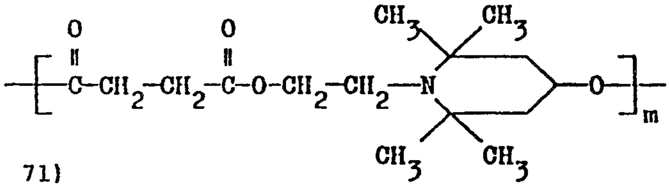

71)

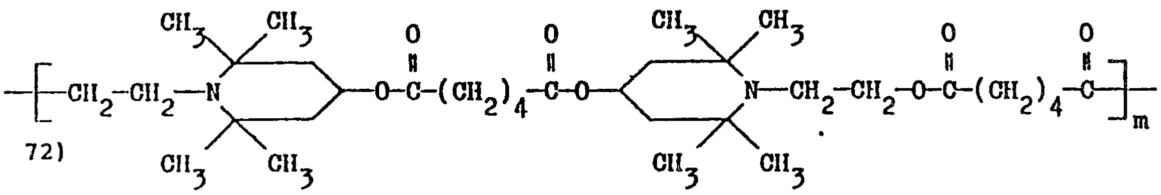

72)

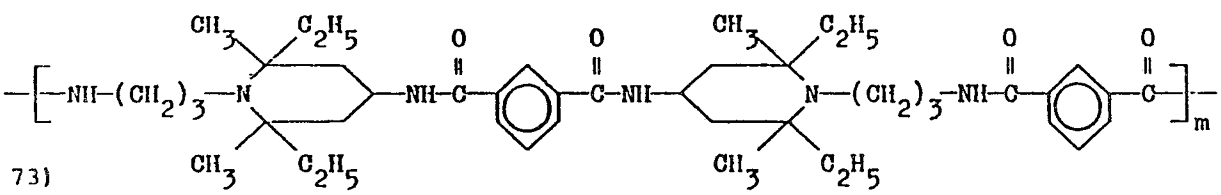

73)

74)

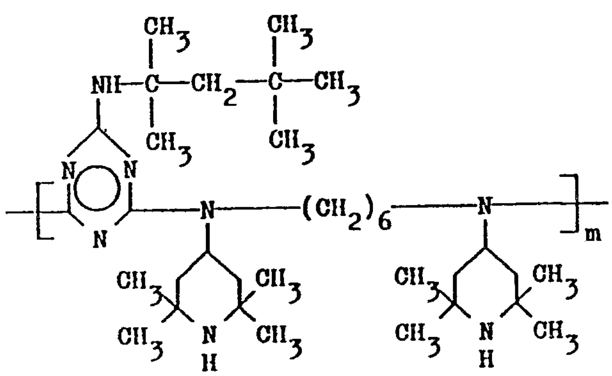

75)

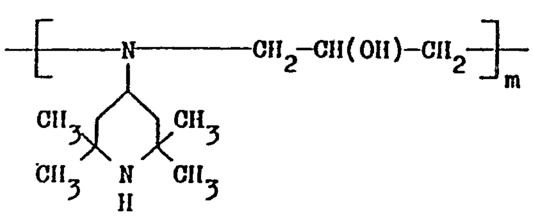

76)

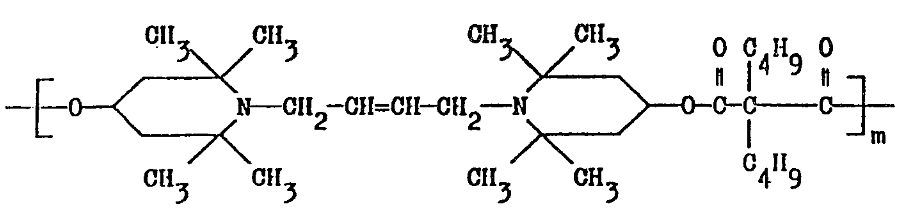

77) 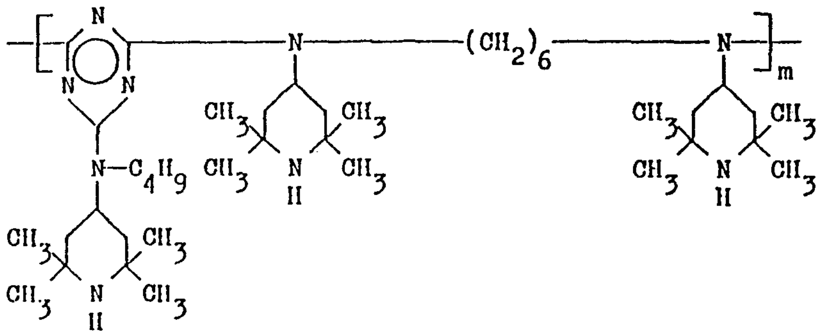

78) 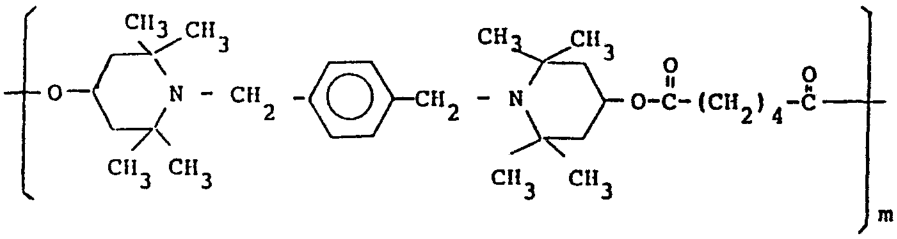

79) 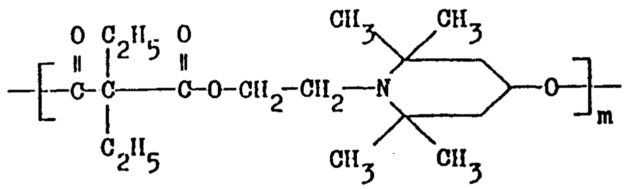

80) 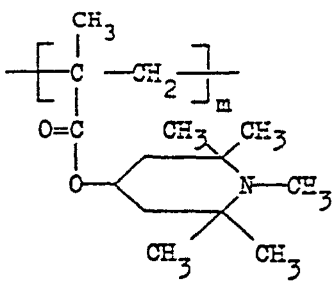

81) 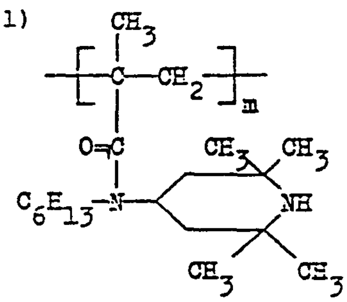

i) Verbindungen, die in ihrem Molekül mindestens eine 2-(2'-Hydroxyphenyl)-benztriazol-Gruppe oder 2-Hydroxybenzophenon-Gruppe und mindestens eine Polyalkylpiperidingruppe enthalten.

Beispiele für 2,2,6,6-Tetraalkylpiperidinlichtschutzmittel dieser Klasse sind die Verbindungen der folgenden Formeln:

82) 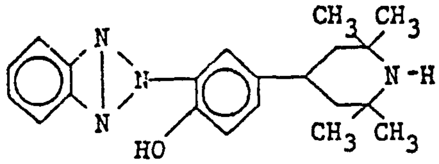

83) 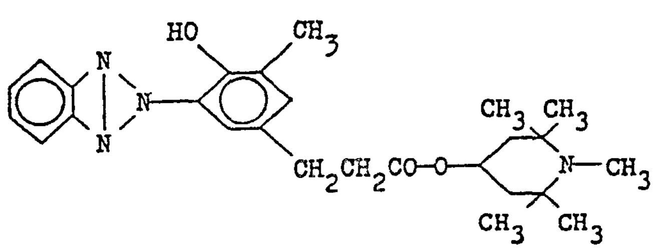

84)
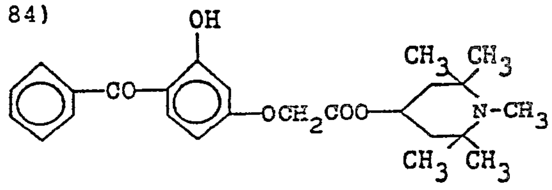

85)
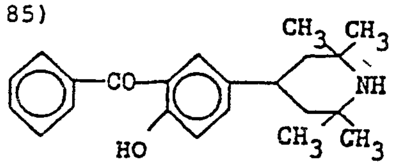

Es können auch 2,2,6,6-Tetraalkylpiperidinderivate der Klassen a) – i) verwendet werden, die mit dem Bindemittel des Lackes chemische Bindungen eingehen. Dies ist der Fall, wenn das 2,2,6,6-Tetraalkylpiperidinderivat eine hierfür geeignete reaktive Gruppe besitzt, wie beispielsweise eine Glycidyl- oder eine Methylolgruppe.

Beispiele solcher Verbindungen sind die Methylol- bzw. Methyloläthergruppen enthaltende 2,2,6,6-Tetraalkylpiperidinderivate der Klasse g).

Soweit die 2,2,6,6-Tetraalkylpiperidinverbindungen basische Verbindungen sind, können sie mit Säuren Salze bilden. Hierfür kommen beispielsweise anorganische Säuren oder organische Carbon-Sulfon-, Phosphon- oder Phosphinsäuren in Frage, wie z.B. Chlorwassersäure, Borsäure, Phosphorsäure, Essigsäure, Salicylsäure, Toluolsulfonsäure oder Benzolphosphonsäure.

Die 2,2,6,6-Tetraalkylpiperidinverbindungen können mit komplexbildenden Metallverbindungen Komplexe bilden, beispielsweise mit Zink-IIacetat, Cobalt-II-acetylacetonat. Nickel-II-acetylacetonat, Aluminium-III-acetylacetonat, Nickel-II-benzoat oder Aluminium-III-benzoylacetonat.

Zur Herstellung der erfindungsgemäss gegen Licht stabilisierten Zweischicht-Uni-Einbrennlackierungen können die üblichen Einbrennlacke auf der Basis von Acryl-, Alkyd-, Polyesterharzen, die gegebenenfalls mit Melamin/Formaldehydharzen, Epoxydharzen oder Polyisocyanaten vernetzt werden, wie sie beispielsweise in H. Wagner, H.F. Sarx, Lackkunstharze beschrieben sind, verwendet werden.

Das Auftragen der Lacke geschieht nach dem herkömmlichen Zweischicht-Verfahren beispielsweise dadurch, dass auf mit einem Coilcoat beschichteten Blech, auf dem zuvor ein handelsüblicher Füller in einer Schichtstärke von 20–30 µm eingebrannt wurde, der Pigment enthaltende Vorlegelack in einer Schichtstärke von 20–30 µm aufgespritzt und nach einer Ablüftzeit von ca. 5 Minuten der Decklack nass in nass mit einer Schichtstärke von 35–40 µm appliziert wird. Nach erneuter Ablüftzeit von ca. 15 Minuten wird je nach der Art des Vernetzungsmittels bei 80–125°C während ca. 30 Minuten eingebrannt.

Die Menge des zugesetzten 2,2,6,6-Tetraalkylpiperidinderivates beträgt dabei 0,01 bis 5 Gew.-%, bezogen auf das lösungsmittelfreie Bindemittel, vorzugsweise 0,5 bis 1 Gew.-%. Die Lacke können die üblichen organischen Lösungsmittel enthalten oder in Wasser gelöst oder dispergiert sein oder lösungsmittelfrei sein.

Decklacke auf Basis von Acryl/Melaminharzen werden bevorzugt. Bei der Herstellung von Acrylharzen bzw. von Acryl-modifizierten Alkydharzen können polymerisierbare 2,2,6,6-Tetraalkylpiperidinderivate (z.B. die Verbindung 7 und 42) in das Harz einpolymerisiert werden.

Der Einbau in das Lackbindemittel kann jedoch auch über Polykondensation bei der Herstellung oder eventuell beim Einbrennen der Acryl-, Alkyd- oder Polyesterharze erfolgen. Beispiele für einkondensierbare 2,2,6,6-Tetraalkylpiperidinderivate sind die Verbindungen 1 und 63 sowie das 1-Hydroxyäthyl-4-hydroxy-2,2,6,6-tetramethylpiperidin oder die Verbindungen der Formeln

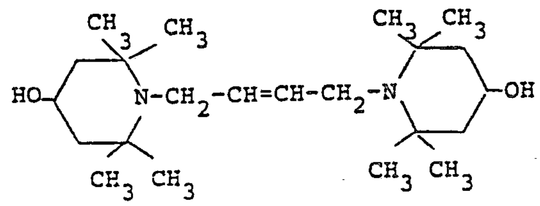

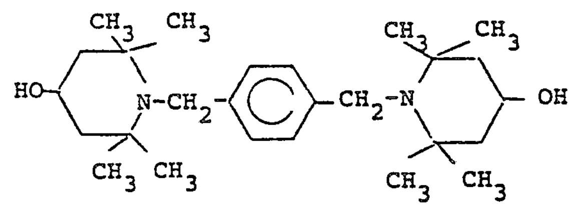

Der Einbau über Polyaddition kann z.B. über die Reaktion freier Carboxylgruppen im Acrylharz mit Glycidylgruppen des 2,2,6,6-Tetraalkylpiperidinderivates folgen. Diese Carboxylgruppen können z.B. durch Einpolymerisation von Acrylsäure eingebaut werden.

In diesen Fällen besteht zusätzlich der Vorteil, dass die Lichtschutzmittel nicht durch Extraktion oder Migration entfernbar sind, so dass ihre Wirkung sehr lange anhält.

Für die Erzielung maximaler Lichtbeständigkeit kann die Mitverwendung von anderen üblichen Lichtschutzmitteln von Vorteil sein. Beispiele hierfür sind UV-Absorber vom Typ der Benzophenone, Oxalanilide, Benztriazole oder Acrylsäurederivate oder metallhaltige Lichtschutzmittel wie z.B. organische Nickelverbindungen.

Im Falle solcher Kombinationen beträgt die Summe aller Lichtschutzmittel 0,02 bis 5 Gew.-%, vorzugsweise 0,5 bis 2 Gew.-%, bezogen auf das Lackharz.

Weitere Zusatzstoffe, die im Lack enthalten sein können, sind Antioxydantien, beispielsweise solche vom Typ sterisch gehinderter Phenolderivate, organische Phosphorverbindungen, wie z.B. Phosphite, Phosphonite oder Phosphine, Weichmacher, Verlaufshilfsmittel, Härtungsbeschleuniger, wie z.B. organische Co-, Mn- oder Zr-Salze, Verdicker, Dispergiermittel oder Haftverbesserer.

Die erfindungsgemässe Stabilisierung ist insbesondere für Fahrzeuglackierungen geeignet.

Die folgenden Beispiele beschreiben die erfindungsgemässe Verwendung von 2,2,6,6-Tetraalkylpiperidinderivaten in Zweischicht-Unilackierungen. Teile bedeuten darin Gewichtsteile, Prozente bedeuten Gewichtsprozente.

Beispiel 1

Grundrezeptur der Lacke

a) Vorlegelack

| | |
|---|---|
| Alftalat AC 451 (Alkydharz der Firma Höchst) | 51,56 Teile |
| Maprenal MF 590 (Melamin/Formaldehydharz der Firma Höchst) | 20,7 Teile |
| $TiO_2$ | 27,6 Teile |
| C. I. Pigment Gelb 24 | 0,14 Teile |

gelöst in einem Lösungsmittelgemisch bestehend aus 44% Xylol, 26% Petroläther und 30% Butylacetat.

b) Decklack

| | |
|---|---|
| Viacryl VC 1341/60%ig (Acrylharz der Vianova Kunstharz AG) in Shellsol A/Butylacetat | 62,5 Teile |
| Maprenal MR 825/71%ig (Melamin/Formaldehydhard der Firma Höchst) in Isobutanol | 17,6 Teile |
| Solvesso 100 (Lösungsmittel der Firma Esso) | 19,4 Teile |
| Paint Additive 11 (Verlaufshilfsmittel von Dow Corning Corp.) | 0;5 Teile |

Herstellung der Zweischicht-Unilackierung

Auf ein mit einem Coil-coat beschichtetes Aluminiumblech wird zunächst ein handelsüblicher Füller (Standox Füllprimer) in einer Schichtstärke von 30 µm aufgespritzt und 15 Minuten bei 175°C eingebrannt. Anschliessend wird der pigmentierte Vorlegelack in einer Schichtstärke von ca. 30 µm aufgespritzt und nach einer Ablüftzeit von 5 Minuten der unpigmentierte Decklack nass in nass mit einer Schichtstärke von 35–40 µm appliziert. Anschliessend wird 30 Minuten bei 130°C eingebrannt.

Bewitterung

Die so erhaltenen Bleche werden vier Wochen im Normklima (23°C/50% relative Luftfeuchtigkeit gelagert und anschliessend der Bewitterung im QUV-Gerät gemäss ASTM G53-077 unterzogen.

Bei der Durchführung der im folgenden beschriebenen Testversuche wurde vor dem Auftragen dem Decklack in der in Kolonne I der nachfolgenden Tabellen 1, 2 und 3 jeweils in % (bezogen auf das Lackharz) angegebenen Menge das in Kolonne II angegebene Lichtschutzmittel zugegeben (im Falle der erfindungsgemäss zu verwendenden Polyelkylpiperidinverbindungen numeriert nach den in der Beschreibung erwähnten Beispielen).

Vergilbungstest nach 1200 Stunden Bewitterung

Die Änderung des Blau-Gelb-Wertes (△ BGW) ist ein Mass für die Vergilbung der Lacke. Sie wird rechnerisch aus den photometrisch ermittelten Farbkoordinaten bestimmt. Die entsprechenden Werte sind in der Kolonne III der nachfolgenden Tabellen 1, 2 und 3 angegeben.

Glanzabfall nach 1200 Stunden Bewitterung

Die Kolonne IV der nachfolgenden Tabellen 1, 2 und 3 gibt die nach 1200 Stunden Bewitterung und nach ASTM D 523 bestimmten Glanzwerte an.

Visueller Aspekt der lackierten Bleche nach 1200 Stunden Bewitterung

Nach der Bewitterung wurden die Bleche nach Trübung, Riss- und Blasenbildung und Delaminierung untersucht. Der Befund ist in der Kolonne V der nachfolgenden Tabellen 1, 2 und 3 angegeben.

Tabelle 1: Lichtschutzwirkung der Polyalkylpiperidinederivate

| I | II | III | IV | | V |
|---|---|---|---|---|---|
| % | Lichtschutzmittel | △ BGW nach 1200 h Bewitterung (QUV) | 20° Glanz nach Bewitterung (QUV) | | Aspekt nach 1200 h Bewitterung (QUV) |
| | | | 0 h | 1200 h | |
| – | – | 16 | 97 | 16 | Riss- und Blasenbildung Delaminierung |
| 1 | Verbindung 11 | 8,7 | 99 | 94 | vereinzelt Blasenbildung |
| 1 | Verbindung 19 | 9,3 | 98 | 91 | vereinzelt Blasenbildung |
| 1 | Verbindung 53 | 9,5 | 97 | 93 | keine Änderung |
| 1 | Verbindung 82 | 8,8 | 93 | 80 | keine Änderung |
| 1 | Verbindung 83 | 9,5 | 98 | 90 | keine Änderung |

Tabelle 2: Lichtschutzwirkung bei Kombination von Polyalkylpiperidinverbindungen und UV-Absorber

| I | II | III | IV | | V |
|---|---|---|---|---|---|
| % | Lichtschutzmittel | Δ BGW nach 1200 h Bewitterung (QUV) | 20° Glanz nach Bewitterung (QUV) | | Aspekt nach 1200 h Bewitterung (QUV) |
| | | | 0 h | 1200 h | |
| – | – | 16 | 97 | 16 | Rissbildung, Blasenbildung, Delaminierung |
| 0,5<br>0,5 | Verbindung 11<br>2-(2-Hydroxy-3,5-di-tert.amyl-phenyl)-benztriazol | 6,2 | 99 | 93 | keine Änderung |
| 0,5<br>0,5 | Verbindung 29<br>2-[2-Hydroxy-3,5-di-(α,α-dimethylbenzyl)-phenyl]-benztriazol | 7,2 | 97 | 91 | keine Änderung |
| 0,5<br>0,5 | Verbindung 53<br>2-[2-Hydroxy-3,5-di-(α,α,-dimethylbenzyl)-phenyl]-benztriazol | 6,4 | 98 | 91 | keine Änderung |
| 0,5<br>0,5 | Verbindung 80<br>2-[2-Hydroxy-3,5-di-(α,α-dimethylbenzyl)-phenyl]-benztriazol | 7,9 | 92 | 79 | keine Änderung |
| 0,5<br>0,5 | Verbindung 30<br>2-[2-Hydroxy-3,5-di-(α,α-dimethylbenzyl)-phenyl]-benztriazol | 7,6 | 97 | 82 | keine Änderung |
| 0,5<br>0,5 | Verbindung 31<br>2-[2-Hydroxy-3,5-di-(α,α-dimethylbenzyl)-phenyl]-benztriazol | 8,0 | 97 | 86 | keine Änderung |

Tabelle 3: Lichtschutzwirkung der UV-Absorber

| I | II | III | IV | | V |
|---|---|---|---|---|---|
| % | Lichtschutzmittel | Δ BGW nach 1200 h Bewitterung (QUV) | 20° Glanz nach Bewitterung (QUV) | | Aspekt nach 1200 h Bewitterung (QUV) |
| | | | 0 h | 1200 h | |
| – | – | 16 | 97 | 16 | Riss- und Blasenbildung Delaminierung |
| 1 | 2-(2-Hydroxy-3,5-di-tert.amyl-phenyl)-benztriazol | 12,5 | 97 | 53 | trüb, starke Blasenbildung |
| 2 | 2-Hydroxy-4-dodecyloxy-benzophenon | 9,5 | 99 | 87 | trüb, Rissbildung |
| 2 | 2,4-Dihydroxy-benzophenon | 9,4 | 99 | 26 | trüb, Rissbildung |
| 2 | 2,2′-Dihydroxy-4,4′-dimethoxy-benzophenon | 10,6 | 99 | 36 | trüb Rissbildung |

**Patentansprüche**

1. Verwendung von 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von Zweischicht-Uni-Einbrennlackierungen auf der Basis von Acryl-, Alkyd- oder Polyesterharzen, die gegebenenfalls mit Melamin/Formaldehydharzen, Epoxydharzen oder Polyisocyanaten vernetzt werden, gegen die Einwirkung von Licht, wobei die Stabilisatoren nur in den unpigmentierten Decklack eingearbeitet werden.

2. Verwendung gemäss Anspruch 1 von Lichtschutzmitteln der Formel (II)

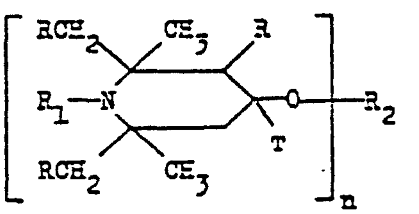

(II)

worin n die Zahlen 1–4 bedeutet, T Wasserstoff oder $-CONH_2$ ist, R Wasserstoff oder Methyl ist, $R_1$ Wasserstoff, Oxyl, $C_1$–$C_{18}$ Alkyl, $C_3$–$C_8$ Alkenyl, $C_{3-C8}$ Alkinyl, $C_7$–$C_{12}$ Aralkyl, $C_1$–$C_8$ Alkanoyl, $C_3$–$C_5$ Alkenoyl, Glycidyl oder eine Gruppe $-CH_2-(OH)-Z$ ist, worin Z Wasserstoff, Methyl, Äthyl oder Phenyl bedeutet und $R_2$, wenn n = 1, Wasserstoff, gegebenenfalls durch ein oder mehrere Sauerstoffatome unterbrochenes $C_1$–$C_{18}$ Alkyl, Cyanäthyl, Benzyl, Glycidyl, einen einwertigen Rest einer aliphatischen, cycloaliphatischen, araliphatischen, aromatischen oder herterocyclischen Carbonsäure, Carbaminsäure oder Phosphor enthaltenden Säure oder einen einwertigen Silylrest, wenn n = 2, $C_2$–$C_{12}$ Alkylen, $C_4$–$C_{12}$ Alkenylen, Xylylen, einen zweiwertigen Rest einer aliphatischen, cycloaliphatischen, araliphatischen, aromatischen oder heterocyclischen Dicarbonsäure, Dicarbaminsäure oder Phosphor enthaltenden Säure oder einen zweiwertigen Silylrest, wenn n = 3, einen dreiwertigen Rest einer aliphatischen, cycloaliphatischen, aromatischen oder heterocyclischen Tricarbonsäure, einer aromatischen Tricarbaminsäure oder einer Phosphor enthaltenden Säure oder einen dreiwertigen Silylrest, wenn n = 4, einen vierwertigen Rest einer aliphatischen, cycloaliphatischen oder aromatischen Tetracarbonsäure bedeutet.

3. Verwendung gemäss Anspruch 2 von Lichtschutzmitteln der Formel (II), worin n die Zahlen 1 oder 2 bedeutet, R Wasserstoff oder Methyl ist, $R_1$ Wasserstoff, $C_1$–$C_{12}$ Alkyl, Allyl, Benzyl, Acetyl, Acryloyl ist und $R_2$, wenn n = 1, einen Rest einer aliphatischen Carbonsäure mit 2–18 C-Atomen, einer cycloaliphatischen Carbonsäure mit 5–12 C-Atomen oder einer aromatischen Carbonsäure mit 7–15 C-Atomen, wenn n = 2, einen Rest einer aliphatischen Dicarbonsäure mit 2–36 C-Atomen, einer cycloaliphatischen oder aromatischen Dicarbonsäure mit 8–14 C-Atomen, einer aliphatischen, cycloaliphatischen oder aromatischen Dicarbaminsäure mit 8–14 C-Atomen, bedeutet.

4. Verwendung gemäss Anspruch 1 von Lichtschutzmitteln der Formel (III)

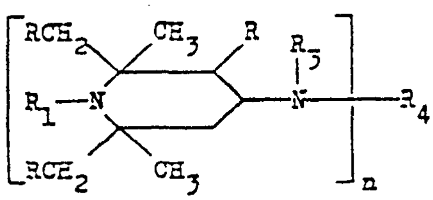

(III)

worin n die Zahlen 1 oder 2 bedeutet, R Wasserstoff oder Methyl ist, $R_1$ Wasserstoff, Oxyl, $C_1$–$C_{18}$ Alkyl, $C_3$–$C_8$-Alkenyl, $C_3$–$C_8$ Alkinyl, $C_7$–$C_{12}$ Aralkyl, $C_1$–$C_8$ Alkanoyl, $C_3$–$C_5$ Alkenoyl, Glycidyl oder eine Gruppe $-CH_2-CH(OH)-Z$ ist, worin Z Wasserstoff, Methyl, Aethyl oder Phenyl bedeutet, und $R_3$ Wasserstoff, $C_1$–$C_{12}$ Alkyl, $C_5$–$C_7$ Cycloalkyl, $C_7$–$C_8$ Aralkyl, $C_2$–$C_{18}$ Alkanoyl, $C_3$–$C_5$ Alkenoyl, Benzoyl ist und $R_4$, wenn n = 1, Wasserstoff, $C_1$–$C_{18}$ Alkyl, $C_5$–$C_7$ Cycloalkyl, gegebenenfalls mit einer Cyano-, Carbonyl- oder Carbamidgruppe substituiertes $C_2$–$C_8$ Alkenyl, Glycidyl eine Gruppe der Formel $-CH_2-CH(OH)-Z''$ oder der Formel $-CONH-Z''$, worin Z″ Wasserstoff, Methyl oder Phenyl bedeutet, wenn n = 2, $C_2$–$C_{12}$ Alkylen, $C_6$–$C_{12}$ Arylen, Xylylen, eine $-CH_2-CH(OH)-CH_2-$Gruppe oder eine Gruppe $-CH_2-CH(OH)-CH_2-O-X-O-CH_2-CH(OH)-OH-CH_2-$ bedeutet, worin X $C_2$–$C_{10}$ Alkylen, $C_6$–$C_{15}$ Arylen, $C_6$–$C_{12}$ Cycloalkylen ist, oder, vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure oder auch die Gruppe $-CO-$ bedeuten kann, oder $R_3$ und $R_4$ zusammen, wenn n = 1, den Imidrest einer aliphatischen, cycloaliphatischen oder aromatischen 1,2- oder 1,3-Dicarbonsäure sein können.

5. Verwendung gemäss Anspruch 1 von Lichtschutzmitteln der Formel (IV)

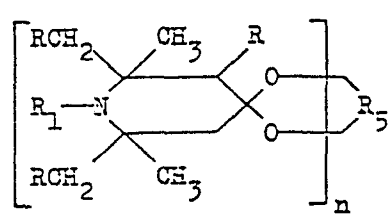

(IV)

worin n die Zahlen 1 oder 2 bedeutet, R Wasserstoff oder Methyl ist, $R_1$ Wasserstoff, Oxyl, $C_1$–$C_{18}$ Alkyl, $C_3$–$C_8$ Alkenyl, $C_3$–$C_8$ Alkinyl, $C_7$–$C_{12}$ Aralkyl, $C_1$–$C_8$ Alkanoyl, $C_3$–$C_5$ Alkenoyl, Glycidyl oder eine Gruppe $-CH_2CH(OH)-Z$ ist, worin Z Wasserstoff, Methyl, Äthyl oder Phenyl bedeutet, $R_5$, wenn n = 1, $C_2$–$C_8$ Alkylen oder Hydroxyalkylen, $C_4$–$C_{22}$ Acyloxyalkylen, wenn n = 2, die Gruppe $(-CH_2)_2(CH_2-)_2$ bedeutet.

6. Verwendung gemäss Anspruch 1 von Lichtschutzmitteln der Formeln (VA), (VB) und (VC)

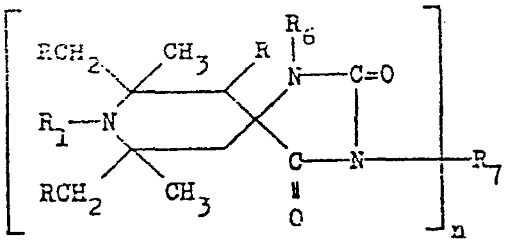

(VA)

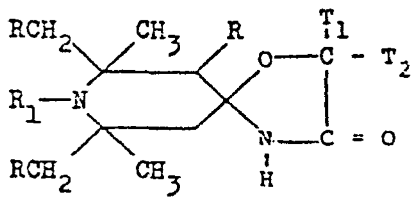

(VB)

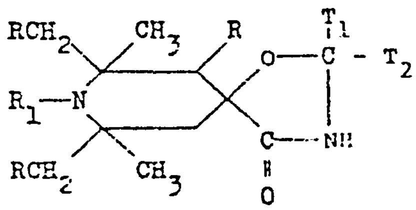

(VC)

worin n die Zahlen 1 oder 2 bedeutet, R Wasserstoff oder Methyl ist, $R_1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe $-CH_2-CH(OH)-Z$ ist worin Z Wasserstoff, Methyl, Äthyl oder Phenyl bedeutet, und $R_6$ Wasserstoff, $C_1$-$C_{12}$ Alkyl, Allyl, Benzyl, Glycidyl, $C_2$-$C_6$ Alkoxyalkyl ist und $R_7$, wenn n = 1, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_4$ Hydroxyalkyl, $C_2$-$C_6$ Alkoxyalkyl, $C_6$-$C_{10}$ Aryl, Glycidyl, eine Gruppe der Formel $-(CH_2)_m-COO-Q$ oder der Formel $-(CH_2)_m-O-CO-Q$, worin m 1 oder 2 und Q $C_1$-$C_{18}$ Alkyl oder Phenyl sind, wenn n = 2, $C_2$-$C_{12}$ Alkylen oder $C_6$-$C_{12}$ Arylen, $C_4$-$C_{12}$ Alkenylen eine Gruppe $-CH_2-CH(OH)-$ $CH_2-O-X-O-CH_2-CH(OH)-CH_2-$, worin X $C_2$-$C_{10}$ Alkylen, $C_6$-$C_{15}$ Arylen, $C_6$-$C_{15}$ Arylen, $C_6$-$C_{12}$ Cycloalkylen ist, oder eine Gruppe $-CH_2CH$ $(OZ)CH_2-(OCH_2-CH(OZ)CH_2)_2-$ bedeutet, worin Z Wasserstoff, $C_1$-$C_{18}$ Alkyl, Allyl, Benzyl, $C_2$-$C_{12}$ Alkanoyl oder Benzoyl ist, $T_1$ und $T_2$ unabhängig voneinander Wasserstoff, $C_1$-$C_{18}$ Alkyl oder gegebenenfalls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom gegebenenfalls durch $C_1$-$C_4$ Alkyl substituiertes $C_5$-$C_7$ Cycloalkyl, Pyrrolidinyl oder Piperidinyl bilden.

7. Verwendung gemäss Anspruch 1 von Lichtschutzmitteln der Formel (VI)

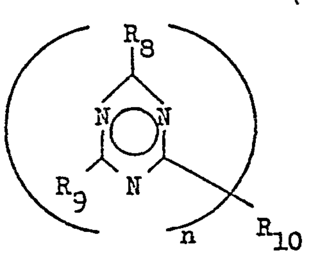

(VI)

worin n die Zahlen 1 oder 2 ist und $R_8$ eine Gruppe der Formel

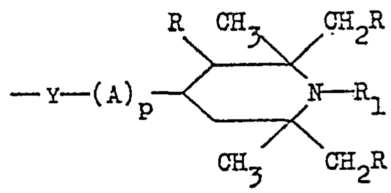

bedeutet, worin R Wasserstoff oder Methyl ist, $R_1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe $-CH_2-CH(OH)-Z$ ist, worin Z Wasserstoff, Methyl, Äthyl oder Phenyl bedeutet, Y -O- oder $-NR_{11}-$ ist, A $C_2$-$C_6$ Alkylen oder $-(CH_2)_3-O-$ und p die Zahlen 0 oder 1 bedeuten, $R_9$ die Gruppen $R_8$, $NR_{11}R_{12}$, $-OR_{13}$, $-NHCH_2OR_{13}$ oder $-N(CH_2OR_{13})_2$ ist, $R_{10}$, wenn n = 1 die Gruppen $R_8$ oder $R_9$ und wenn n = 2 die Gruppe -Y-B-Y-, worin B gegebenenfalls durch $-N(R_{14})-$ unterbrochenes $C_2$-$C_6$ Alkylen bedeutet, $R_{11}$ $C_1$-$C_{12}$ Alkyl, Cyclohexyl, Benzyl oder $C_1$-$C_4$ Hydroxyalkyl oder eine Gruppe der Formel

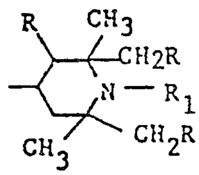

ist, $R_{12}$ $C_1$-$C_{12}$ Alkyl, Cyclohexyl, $C_1$-$C_4$ Hydroxyalkyl, $R_{13}$ Wasserstoff, $C_1$-$C_{12}$ Alkyl oder Phenyl und $R_{14}$ Wasserstoff, $C_1$-$C_{12}$ Alkyl, Cyclohexyl, Benzyl, Phenyl bedeuten oder $R_{11}$ und $R_{12}$ zusammen $C_4$-$C_5$ Alkylen oder Oxaalkylen sind oder auch $R_{11}$ und $R_{12}$ jeweils eine Gruppe der Formel

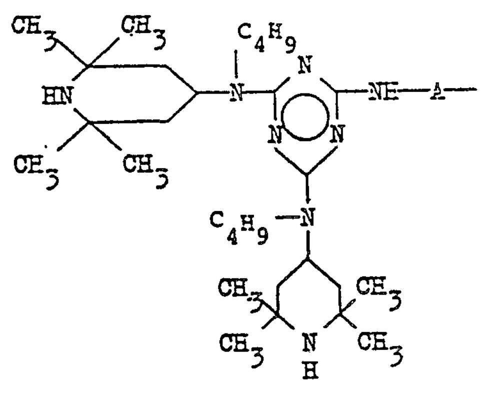

bedeuten.

8. Verwendung gemäss Anspruch 1 von Lichtschutzmitteln der Formel (VII)

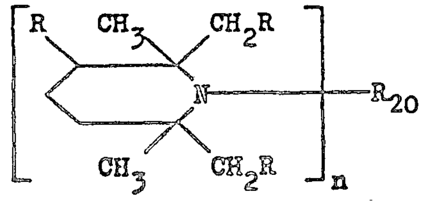

(VII)

worin n die Zahlen 1 oder 2 bedeutet, R Wasserstoff oder Methyl ist und $R_{20}$, wenn n = 1, $C_4$-$C_{18}$ Alkyl, $C_7$-$C_{12}$ Aralkyl, die Gruppe -CO-$R_{15}$, $C_1$-$C_4$ Alkyl substituiert durch -CN, -$COOR_{16}$, -OH, -$OCOR_{17}$ bedeutet, wobei $R_{15}$ $C_1$-$C_{12}$ Alkyl, Alkenyl oder Phenyl, $R_{16}$ $C_1$-$C_{18}$ Alkyl, $R_{17}$ $C_1$-$C_{18}$ Alkyl, $C_2$-$C_{10}$ Alkenyl, Cyclohexyl, Benzyl oder $C_6$-$C_{10}$ Aryl sind oder, wenn n = 2, $R_{14}$, $C_4$-$C_{12}$ Alkylen, 2-Butenylen-1,4, Xylylen, die Gruppe -$(CH_2)_2$-OOC-$R_{18}$-COO-$(CH_2)_2$- oder die Gruppe -$CH_2$-OOC-$R_{19}$-COO-$CH_2$- ist, wobei $R_{18}$ $C_2$-$C_{10}$ Alkylen, Phenylen oder Cyclohexylen und $R_{19}$ $C_2$-$C_{10}$ Alkylen, Xylylen oder Cyclohexylen bedeuten.

9. Verwendung gemäss Anspruch 1 von Lichtschutzmitteln der Formel (VIII)

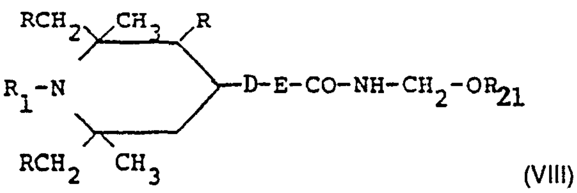

(VIII)

worin D -N($R_{22}$)- oder -O- ist, E $C_1$-$C_3$ Alkylen, die Gruppe -$CH_2$-CH($R_{23}$)-O-, worin $R_{23}$ Wasserstoff, Methyl oder Phenyl ist, die Gruppe -$(CH_2)_3$-NH- oder eine Einfachbindung bedeutet, R Wasserstoff oder Methyl ist, $R_1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe -$CH_2$-CH(OH)-Z ist, worin Z Wasserstoff, Methyl, Äthyl oder Phenyl und $R_{21}$ Wasserstoff oder $C_1$-$C_{18}$ Alkyl bedeuten, $R_{22}$ Wasserstoff, $C_1$-$C_{18}$ Alkyl, $C_5$-$C_7$ Cycloalkyl, $C_7$-$C_{12}$ Aralkyl, Cyanäthyl, $C_6$-$C_{10}$ Aryl, die Gruppe -$CH_2$-CH($R_{23}$)-OH, worin $R_{23}$ die oben angegebene Bedeutung hat, eine Gruppe der Formel

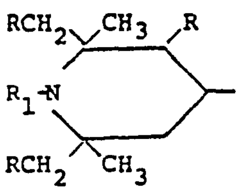

oder eine Gruppe der Formel

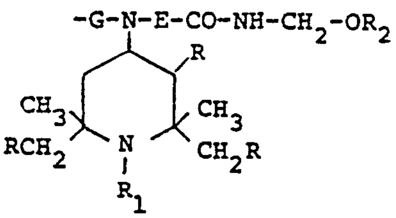

bedeutet, worin G $C_2$-$C_6$ Alkylen oder $C_6$-$C_{12}$ Arylen sein kann, oder $R_{22}$ eine Gruppe -E-CO-NH-$CH_2$-$OR_{21}$ ist.

10. Verwendung von 2,2,6,6-Tetraalkylpiperidinverbindungen nach Anspruch 1, dadurch gekennzeichnet, dass man oligomere oder polymere Verbindungen verwendet, deren wiederkehrende Struktureinheit einen 2,2,6,6-Tetraalkylpiperidinrest enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

11. Verwendung von 2,2,6,6-Tetraalkylpiperidinverbindungen gemäss Anspruch 1, dadurch gekennzeichnet, dass man Verbindungen, die in ihrem Molekül mindestens eine 2-(2'-Hydroxyphenyl)-benztriazol-Gruppe oder 2-Hydroxybenzophenon-Gruppe und mindestens eine 2,2,6,6-Tetraalkylpiperidingruppe enthalten, verwendet.

12. Verwendung nach einem der vorhergehenden Ansprüche, dadurch gekennzeichnet, dass man ein Säureadditionssalz einer 2,2,6,6-Tetraalkylpiperidinverbindung verwendet.

13. Verwendung nach einem der Ansprüche 1-11, dadurch gekennzeichnet, dass man einen Komplex einer 2,2,6,6-Tetraalkylpiperidinverbindung mit einer Metallverbindung verwendet.

14. Verwendung nach einem der vorhergehenden Ansprüche, dadurch gekennzeichnet, dass man die 2,2,6,6-Tetraalkylpiperidinverbindung in einer Menge von 0,01 bis 5 Gew.-%, bezogen auf das lösungsmittelfreie Bindemittel (Lackharz), verwendet.

15. Verwendung nach Anspruch 14, dadurch gekennzeichnet, dass man zusätzlich andere Lichtschutzmittel verwendet, deren Menge so gewählt wird, dass die Summe aller Lichtschutzmittel 0,02 bis 5 Gew.-%, bezogen auf das lösungsmittelfreie Bindemittel (Lackharz), beträgt.

16. Verwendung nach einem der Ansprüche 14 oder 15, dadurch gekennzeichnet, dass als weitere Additive Antioxydantien, Weichmacher, Verlaufsmittel, Härtungsbeschleuniger, Verdicker, Dispergiermittel oder Haftverbesserer zugegeben werden.

17. Verwendung von 2,2,6,6-Tetraalkylpiperidinverbindungen nach Anspruch 1, dadurch gekennzeichnet, dass man als Decklack einen Lack auf der Basis von Acryl/Melaminharzen verwendet.

18. Verwendung von 2,2,6,6-Tetraalkylpiperidinverbindungen nach Anspruch 1, dadurch gekennzeichnet, dass die Lackierung eine Fahrzeuglackierung ist.

## Claims

1. The use of 2,2,6,6-tetraalkylpiperidine compounds or their acid addition salts or complexes with metal compounds, if desired together with further stabilisers, for stabilising two-layer unilacquer coatings based on acrylic, alkyd or polyester resins, which, if desired, can be crosslinked with melamine/formaldehyde resins, epoxide resins or polyisocyanates, against the action of light, which stabilisers are incorporated only in the unpigmented topcoat lacquer.

2. The use, according to claim 1, of a light stabiliser of the formula (II)

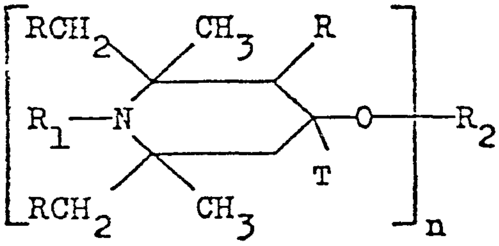

(II)

in which n is the numbers 1-4, T is hydrogen or $-CONH_2$, R is hydrogen or methyl, $R_1$ is hydrogen, oxyl, $C_1$-$C_{18}$ alkyl, $C_3$-$C_8$ alkenyl, $C_3$-$C_8$ alkynyl, $C_7$-$C_{12}$ aralkyl, $C_1$-$C_8$ alkanoyl, $C_3$-$C_5$ alkenoyl, glycidyl or a group $-CH_2CH(OH)$-Z, in which Z is hydrogen, methyl, ethyl or phenyl and $R_2$, if n = 1, is hydrogen, $C_1$-$C_{18}$ alkyl, which can be interrupted by one ore more oxygen atoms, cyanoethyl, benzyl, glycidyl, a monovalent radical of an aliphatic, cycloaliphatic, araliphatic, aromatic or heterocyclic carboxylic acid, carbamic acid or phosphorus-containing acid or a monovalent silyl radical, if n = 2 is $C_1$-$C_{12}$ alkylene, $C_4$-$C_{12}$ alkenylene, xylylene, a divalent radical of an aliphatic, cycloaliphatic, araliphatic, aromatic or heterocyclic dicarboxylic acid, dicarbamic acid or phosphorus-containing acid or a divalent silyl radical, if n = 3 is a trivalent radical of an aliphatic, cycloaliphatic, aromatic or heterocyclic tricarboxylic acid, of an aromatic tricarbamic acid or of a phosphorus-containing acid or a trivalent silyl radical and if n = 4 is a tetravalent radical of an aliphatic, cycloaliphatic or aromatic tetracarboxylic acid.

3. The use, according to claim 2, of a light stabiliser of the formula (II), in which n is the number 1 or 2, R is hydrogen or methyl, $R_1$ is hydrogen, $C_1$-$C_{12}$ alkyl, allyl, benzyl, acetyl or acryloyl and $R_2$, if n = 1, is a radical of an aliphatic carboxylic acid having 2-18 C atoms, of a cycloaliphatic carboxylic acid having 5-12 C atoms or of an aromatic carboxylic acid having 7-15 C atoms, and if n = 2 is a radical of an aliphatic dicarboxylic acid having 2-36 C atoms, of a cycloaliphatic or aromatic dicarboxylic acid having 8-14 C atoms or of an aliphatic, cycloaliphatic or aromatic dicarbamic acid having 8-14 C atoms.

4. The use, according to claim 1, of a light stabiliser of the formula (III)

(III)

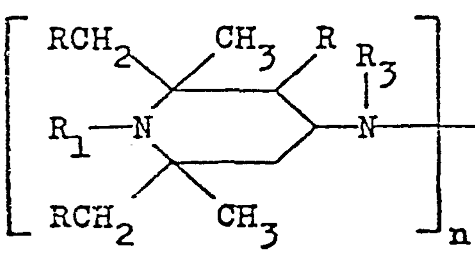

in which n is the number 1 or 2, R is hydrogen or methyl, $R_1$ is hydrogen, oxyl, $C_1$-$C_{18}$ alkyl, $C_3$-$C_8$ alkenyl, $C_3$-$C_8$ alkynyl, $C_7$-$C_{12}$ aralkyl, $C_1$-$C_8$ alkanoyl, $C_3$-$C_5$ alkenoyl, glycidyl or a group $-CH_2$-CH(OH)-Z, in which Z is hydrogen, methyl, ethyl or phenyl, and $R_3$ is hydrogen, $C_1$-$C_{12}$ alkyl, $C_5$-$C_7$ cycloalkyl, $C_7$- $C_8$ aralkyl, $C_2$-$C_{18}$ alkanoyl, $C_3$-$C_5$ alkenoyl or benzoyl and $R_4$, if n = 1, is hydrogen, $C_1$-$C_{18}$ alkyl, $C_5$-$C_7$ cycloalkyl, $C_2$-$C_8$ alkenyl, which is unsubstituted or substituted by a cyano, carbonyl or carbamide group, glycidyl or a group of the formula $-CH_2$-CH(OH)-Z″ or of the formula -CONH-Z″, in which Z″ is hydrogen, methyl or phenyl, and if n = 2 is $C_2$-$C_{12}$ alkylene, $C_6$-$C_{12}$ arylene, xylylene, a $-CH_2$-CH(OH)-$CH_2$ group or a group $-CH_2$-CH(OH) $-CH_2$-O-X-O-$CH_2$-CH(OH)-$CH_2$-, in which X is $C_2$-$C_{10}$ alkylene, $C_6$-$C_{15}$ arylene or $C_6$-$C_{12}$ cycloalkylene, or, with the proviso that $R_3$ is not alkanoyl, alkenoyl or benzoyl, $R_4$ can also be a divalent radical of an aliphatic, cycloaliphatic or aromatic dicarboxylic acid or dicarbamic acid or the group -CO-, or $R_3$ and $R_4$ together, if n = 1, can be the imide radical of an aliphatic, cycloaliphatic or aromatic 1,2- or 1,3-dicarboxylic acid.

5. The use, according to claim 1, of a light stabiliser of the formula (IV)

(IV)

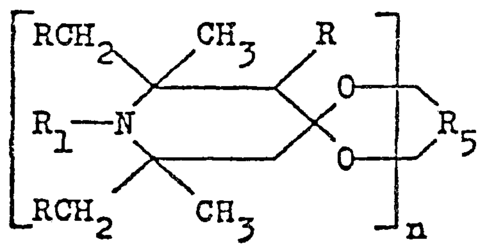

in which n is the number 1 or 2, R is hydrogen or methyl, $R_1$ is hydrogen, oxyl, $C_1$-$C_{18}$ alkyl, $C_3$-$C_8$ alkenyl, $C_3$-$C_8$ alkynyl, $C_7$-$C_{12}$ aralkyl, $C_1$-$C_8$ alkanoyl, $C_{3-5}$ alkenoyl, glycidyl or a group $-CH_2$-CH(OH)-Z, in which Z is hydrogen, methyl, ethyl or phenyl, and $R_5$, if n = 1, is $C_2$-$C_8$ alkylene or hydroxyalkylene or $C_4$-$C_{22}$ acyloxyalkylene, and if n = 2 is the group $(-CH_2)_2C(CH_2-)_2$.

6. The use, according to claim 1, of a light stabiliser of the formulae (VA), (VB) or (VC)

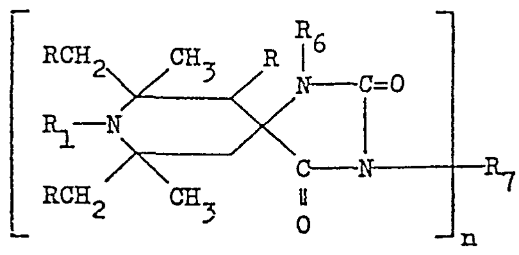

(VA)

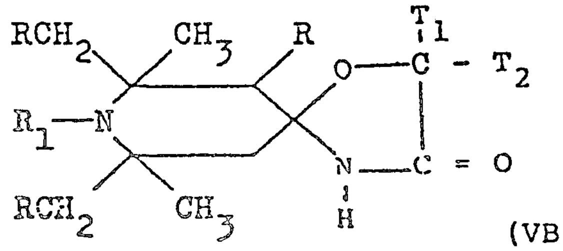

(VB)

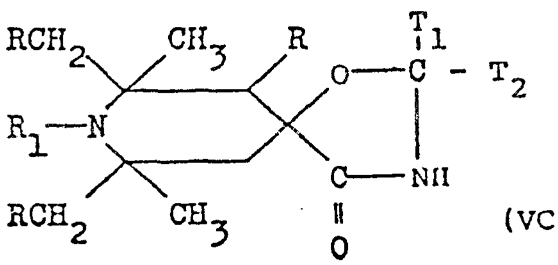

(VC)

in which n is the number 1 or 2, R is hydrogen or methyl, $R_1$ is hydrogen, oxyl, $C_1$–$C_{18}$ alkyl, $C_3$–$C_8$ alkenyl, $C_3$–$C_8$ alkynyl, $C_7$–$C_{12}$ aralkyl, $C_1$–$C_8$ alkanoyl, $C_3$–$C_5$ alkenoyl, glycidyl or a group $-CH_2-CH(OH)-Z$, in which Z is hydrogen, methyl, ethyl or phenyl, and $R_6$ is hydrogen, $C_1$–$C_{12}$ alkyl, allyl, benzyl, glycidyl or $C_2$–$C_6$ alkoxyalkyl and $R_7$, if n = 1, is hydrogen, $C_1$–$C_{12}$ alkyl, $C_3$–$C_5$ alkenyl, $C_7$–$C_9$ aralkyl, $C_5$–$C_7$ cycloalkyl, $C_2$–$C_4$ hydroxyalkyl, $C_2$–$C_6$ alkoxyalkyl, $C_6$–$C_{10}$ aryl, glycidyl or a group of the formula $-(CH_2)_m-COO-Q$ or of the formula $-(CH_2)_m-O-CO-Q$, in which m is 1 or 2 and Q is $C_1$–$C_{18}$ alkyl or phenyl, and if n = 2 is $C_2$–$C_{12}$ alkylene or $C_6$–$C_{12}$ arylene, $C_4$–$C_{12}$ alkenylene a group $-CH_2-CH(OH)-CH_2-O-X-O-CH_2-CH(OH)-CH_2-$, in which X is $C_2$–$C_{10}$ alkylene, $C_6$–$C_{15}$ arylene or $C_6$–$C_{12}$ cycloalkylene, or a group $-CH_2CH(OZ)\ CH_2-(OCH_2-CH(OZ)CH_2)_2-$, in which Z is hydrogen, $C_1$–$C_{18}$ alkyl, allyl, benzyl, $C_2$–$C_{12}$ alkanoyl or benzoyl, and $T_1$ and $T_2$ independently of one another are hydrogen, $C_1$–$C_{18}$ alkyl or $C_6$–$C_{10}$ aryl which is unsubstituted or substituted by halogen or $C_1$–$C_4$ alkyl, or $C_7$–$C_9$ aralkyl, or $T_1$ and $T_2$ together with the C atom which bonds them form $C_5$–$C_7$ cycloalkyl, pyrrolidinyl or piperidinyl, which are unsubstituted or substituted by $C_1$–$C_4$ alkyl.

7. The use, according to claim 1, of a light stabiliser of the formula (VI)

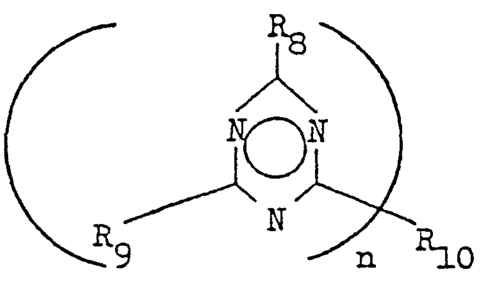

(VI)

in which n is the number 1 or 2 and $R_8$ is a group of the formula

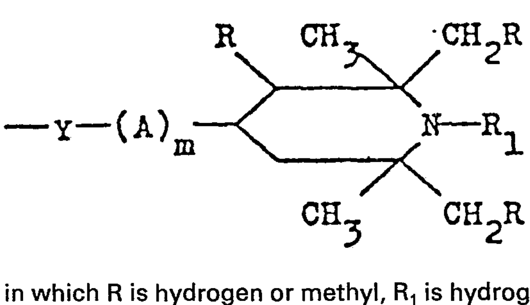

in which R is hydrogen or methyl, $R_1$ is hydrogen, oxyl, $C_1$–$C_{18}$ alkyl, $C_3$–$C_8$ alkenyl, $C_3$–$C_8$ alkynyl, $C_7$–$C_{12}$ aralkyl, $C_1$–$C_{18}$ alkanoyl, $C_3$–$C_5$ alkenoyl, glycidyl or a group $-CH_2-CH(OH)-Z$, in which Z is hydrogen, methyl, ethyl or phenyl, Y is -O- or $-NR_{11}-$, A is $C_2$–$C_6$ alkylene or $-(CH_2)_3-O-$ and m is the numbers 0 or 1, $R_9$ is the groups $R_8$, $NR_{11}R_{12}$, $-OR_{13}$, $-NHCH_2OR_{13}$ or $-N(CH_2OR_{13})_2$, and $R_{10}$, if n = 1, is the groups $R_8$ or $R_9$, and if n = 2, is the group -Y-B-Y-, in which B is $C_2$–$C_6$ alkylene which can be interrupted by $-N(R_{14})-$, and $R_{11}$ is $C_1$–$C_{12}$ alkyl, cyclohexyl, benzyl or $C_1$–$C_4$ hydroxyalkyl or a group of the formula

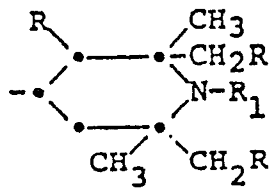

$R_{12}$ is $C_1$–$C_{12}$ alkyl, cyclohexyl, benzyl or $C_1$–$C_4$ hydroxyalkyl, $R_{13}$ is hydrogen, $C_1$–$C_{12}$ alkyl or phenyl and $R_{14}$ is hydrogen, $C_1$–$C_{12}$ alkyl, cyclohexyl, benzyl or phenyl, or $R_{11}$ and $R_{12}$ together are $C_4$–$C_5$ alkylene or oxaalkylene, or $R_{11}$ and $R_{12}$ are each a group of the formula

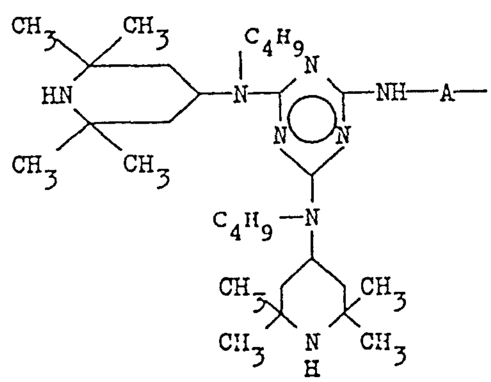

8. The use, according to claim 1, of a light stabiliser of the formula (VII)

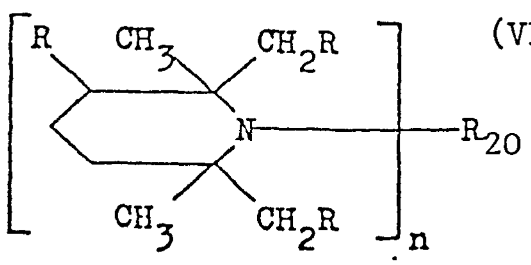

(VII)

in which n is the number 1 or 2, R is hydrogen or methyl and $R_{20}$, if n = 1, is $C_4$–$C_{18}$ alkyl, $C_7$–$C_{12}$ aralkyl, the group $-CO-R_{15}$ or $C_1$–$C_4$ alkyl substituted by -CN, $-COOR_{16}$, -OH or $-OCOR_{17}$, in which $R_{15}$ is $C_1$–$C_{12}$ alkyl, $C_2$–$C_4$ alkenyl or phenyl, $R_{16}$ is $C_1$–$C_{18}$ alkyl and $R_{17}$ is $C_1$–$C_{18}$ alkyl, $C_2$–$C_{10}$ alkenyl, cyclohexyl, benzyl or $C_6$–$C_{10}$ aryl, or, if n = 2, $R_{14}$ is $C_4$–$C_{12}$ alkylene, 2-but-1,4-enylene, xylylene, the group $-(CH_2)_2-OOC-R_{18}-COO-(CH_2)_2-$ or the group $-CH_2-OOC-R_{19}-COO-CH_2-$, in which $R_{18}$ is $C_2$–$C_{10}$ alkylene, phenylene or cyclohexylene and $R_{19}$ is $C_2$–$C_{10}$ alkylene, xylylene or cyclohexylene.

9. The use, according to claim 1, of a light stabiliser of the formula (VIII)

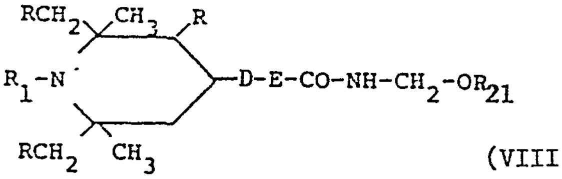

(VIII)

in which D is $-N(R_{22})-$ or $-O-$, E is $C_1$–$C_3$ alkylene, the group $-CH_2-CH(R_{23})-O-$, in which $R_{23}$ is hydrogen, methyl or phenyl, the group $-(CH_2)_3-NH-$ or a single bond, R is hydrogen or methyl, $R_1$ is hydrogen, oxyl, $C_1$–$C_{18}$ alkyl, $C_3$–$C_8$ alkenyl, $C_3$–$C_8$ alkynyl, $C_7$–$C_{12}$ aralkyl, $C_1$–$C_8$ alkanoyl, $C_3$–$C_5$ alkenoyl, glycidyl or a group $-CH_2-CH(OH)-Z$, in which Z is hydrogen, methyl or phenyl, and $R_{21}$ is hydrogen or $C_1$–$C_{18}$ alkyl and $R_{22}$ is hydrogen, $C_1$–$C_{18}$ alkyl, $C_5$–$C_7$ cycloalkyl, $C_7$–$C_{12}$ aralkyl, cyanoethyl, $C_6$–$C_{10}$ aryl, the group $-CH_2-CH(R_{23})-OH$, in which $R_{23}$ is as defined above, a group of the formula

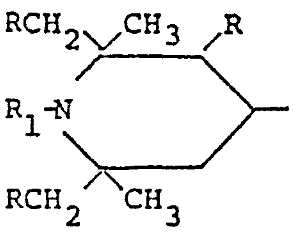

or a group of the formula

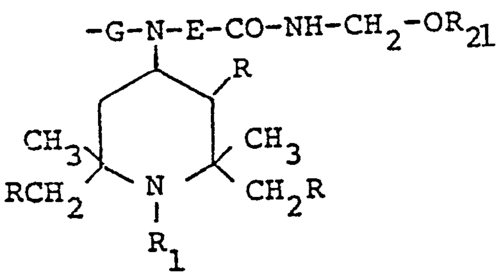

in which G can be $C_2$–$C_6$ alkylene or $C_6$–$C_{12}$ arylene, or $R_{22}$ is a group $-E-CO-NH-CH_2-OR_{21}$.

10. Use according to claim 1, wherein the light stabiliser used is an oligomeric or polymeric compound in which the recurring structural unit contains a 2,2,6,6-tetraalkylpiperidine radical, especially a polyester, polyether, polyamide, polyamine, polyurethane, polyurea, polyamino-triazine, poly(meth)acrylate or poly(meth)acrylamide, or a copolymer thereof, which contains such a radical.

11. Use according to claim 1, wherein the light stabiliser used is a compound which contains, in its molecule, at least one 2-(2'-hydroxyphenyl)-benztriazole group or 2-hydroxybenzophenone group and at least one polyalkylpiperidine group.

12. Use according to any one of the preceding claims, wherein an acid addition salt of a 2,2,6,6-tetraalkylpiperidine compound is used.

13. Use according to any one of claims 1 to 11, wherein a complex of a 2,2,6,6-tetraalkylpiperidine compound with a metal compound is used.

14. Use according to any one of the preceding claims, wherein the 2,2,6,6-tetraalkylpiperidine compound is used in an amount of 0.01 to 5% by weight, based on the solvent-free binder (lacquer resin).

15. Use according to claim 14, wherein other light stabilisers are additionally used, the amount of these stabilisers being so chosen that the sum of all of the light stabilisers is 0.02 to 5% by weight, based on the solvent-free binder (lacquer resin).

16. Use according to either of claims 14 and 15, wherein antioxidants, plasticisers, flow control agents, curing accelerators, thickeners, dispersing agents or adhesion improvers are added as further additives.

17. Use according to claim 1, wherein the topcoat lacquer used is a lacquer based on acrylic/melamine resins.

18. Use of 2,2,6,6-tetraalkylpiperidine compounds according to Claim 1 for the lacquer-coating of vehicles.

**Revendications**

1. Utilisation de tétraalkyl-2,2,6,6 pipéridines, de leurs sels d'addition d'acide ou de leurs complexes avec des composés métalliques, éventuellement avec d'autres stabilisants, pour stabiliser contre l'action de la lumière des peintures à deux couches à unicuisson, à base de résines acryliques, alkydes ou polyesters, qui sont éventuellement réticulées par des résines mélamine formaldéhyde, par des résines époxydes ou par des polyisocyanates, les stabilisants n'étant incorporés que dans le vernis de couverture non pigmenté.

2. Utilisation selon la revendication 1 de stabilisant à la lumière, répondant à la formule (II):

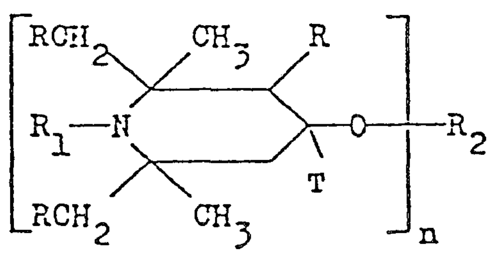

(II)

dans laquelle n représente les nombres 1 à 4; T est un atome d'hydrogène ou $-CONH_2$; R est un atome d'hydrogène ou un groupe méthyle; $R_1$ est un atome d'hydrogène ou un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle ayant 3 à 5 atomes de carbone, glycidyle ou un groupe $-CH_2-CH(OH)-Z$ (dans laquelle Z représente un atome d'hydrogène ou un groupe méthyle, éthyle ou phényle); et,

lorsque n vaut 1, $R_2$ représente un atome d'hydrogène, un groupe alkyle ayant 1 à 18 atomes de carbone (éventuellement interrompu par un ou plusieurs atomes d'oxygène), cyanéthyle, benzyle, glycidyle, un radical monovalent d'un acide carboxylique, carbamique ou d'un acide contenant du phosphore, aliphatique, cycloaliphatique, araldiphatique, aromatique ou hétérocyclique, ou un radical silyle monovalent; lorsque n vaut 2, $R_2$ représente un groupe alkylène ayant 2 à 12 atomes de carbone, alcénylène ayant 4 à 12 atomes de carbone, xylylène, un radical divalent d'un acide dicarboxylique, dicarbamique ou contenant du phosphore, aliphatique, cycloaliphatique, araliphatique, aromatique ou hétérocyclique, ou un radical silyle divalent; lorsque n vaut 3, $R_2$ représente un radical trivalent d'un acide tricarboxylique aliphatique, cycloaliphatique, aromatique ou hétérocyclique, d'un acide tricarbamique aromatique ou d'un acide contenant du phosphore, ou il représente un radical silyle trivalent; lorsque n vaut 4, $R_2$ représente un radical tétravalent d'un acide tétracarboxylique aliphatique, cycloaliphatique ou aromatique.

3. Utilisation, selon la revendication 2, d'agents de stabilisation à la lumière, répondant à la formule (II) dans laquelle n représente les nombres 1 ou 2; R est un atome d'hydrogène ou un groupe methyle; $R_1$ est un atome d'hydrogène, un groupe alkyle ayant 1 à 12 atomes de carbone, allyle, benzyle, acétyle, acryloyle; et, lorsque n vaut 1, $R_2$ représente un radical d'un acide carboxylique aliphatique ayant 2 à 18 atomes de carbone, d'un acide carboxylique cycloaliphatique ayant 5 à 12 atomes de carbone ou d'un acide carboxylique aromatique ayant 7 à 15 atomes de carbone; lorsque n vaut 2, $R_2$ représente un radical d'un acide dicarboxylique aliphatique contenant 2 à 36 atomes de carbone, d'un acide dicarboxylique cycloaliphatique ou aromatique comportant 8 à 14 atomes de carbone, d'un acide dicarbamique aliphatique, cycloaliphatique ou aromatique ayant 8 à 14 atomes de carbone.

4. Utilisation, selon la revendication 1, de stabilisants à l'égard de la lumière, répondant à la formule (III):

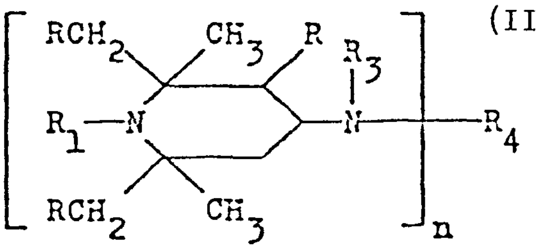

(III)

dans laquelle n représente les nombres 1 ou 2; R est un atome d'hydrogène ou un groupe méthyle; $R_1$ représente un atome d'hydrogène, un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle, ayant 3 à 5 atomes de carbone, glycidyle ou un groupe $-CH_2-CH(OH)-Z$ [dans lequel Z représente un atome d'hydrogène ou un groupe méthyle, éthyle ou phényle], et $R_3$ est un atome d'hydrogène, un groupe alkyle ayant 1 à 12 atomes de carbone, cycloalkyle ayant 5 à 7 atomes de carbone, aralkyle ayant 7 ou 8 atomes de carbone, alcanoyle ayant 2 à 18 atomes de carbone, alcénoyle ayant 3 à 5 atomes de carbone ou benzoyle; et, lorsque n vaut 1, $R_4$ représente un atome d'hydrogène, un groupe alkyle ayant 1 à 18 atomes de carbone, cycloalkyle ayant 5 à 7 atomes de carbone, alcényle ayant 2 à 8 atomes de carbone (et éventuellement substitué par un groupe cyano, carbonyle ou carbamide), glycidyle, un groupe de formule $-CH_2-CH(OH)-Z''$ ou de formule $-CONH-Z''$ (dans lesquelles Z'' représente un atome d'hydrogène, un groupe méthyle ou phényle); lorsque n vaut 2, $R_4$ représente un groupe alkylène ayant 2 à 12 atomes de carbone, arylène ayant 6 à 12 atomes de carbone, xylylène, un groupe $-CH_2-CH(OH)-CH_2-$ ou un groupe $-CH_2-CH(OH)-CH_2-O-X-O-CH_2-CH(OH)-CH_2-$ (dans laquelle X représente un groupe alkylène ayant 2 à 10 atomes de carbone, arylène ayant 6 à 15 atomes de carbone ou cycloalkylène ayant 6 à 12 atomes de carbone) ou, si $R_3$ ne représente pas un groupe alcanoyle, alcénoyle ou benzoyle, $R_4$ peut aussi représenter un radical divalent d'un acide dicarboxylique ou dicarbamique aliphatique, cycloaliphatique ou aromatique ou également le groupe -CO-; ou bien, lorsque n vaut 1, $R_3$ et $R_4$ peuvent, lorsqu'ils sont pris ensemble, représenter le radical imide d'un acide dicarboxylique-1,2 ou -1,3 aliphatique, cycloaliphatique ou aromatique.

5. Utilisation selon la revendication 1 de stabilisants à l'égard de la lumière, de formule (IV):

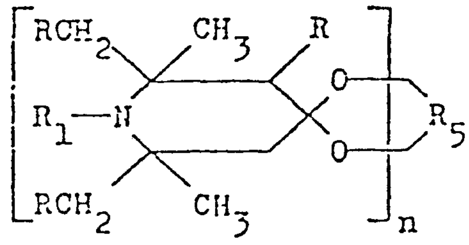

(IV)

dans laquelle n représente les nombres 1 ou 2; R est un atome d'hydrogène ou un groupe méthyle; $R_1$ est un atome d'hydrogène ou un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle ayant 3 à 5 atomes de carbone, glycidyle ou un groupe $-CH_2-CH(OH)-Z$ (dans laquelle Z représente un atome d'hydrogène ou un groupe méthyle, éthyle ou phényle); lorsque n vaut 1, $R_5$ représente un groupe alkylène ou hydroxyalkylène ayant 2 à 8 atomes de carbone ou un groupe acyloxyalkylène ayant 4 à 22 atomes de carbone et, lorsque n vaut 2, $R_5$ représente le groupe $(-CH_2)_2(CH_2-)_2$.

6. Utilisation selon la revendication 1 de stabilisants à l'égard de la lumière, répondant aux formules (VA), (VB) ou (VC):

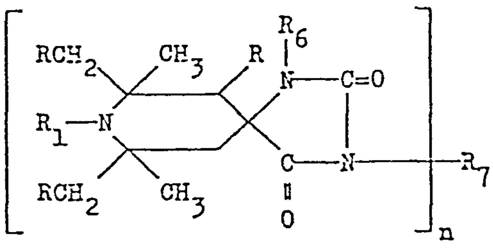

(VA)

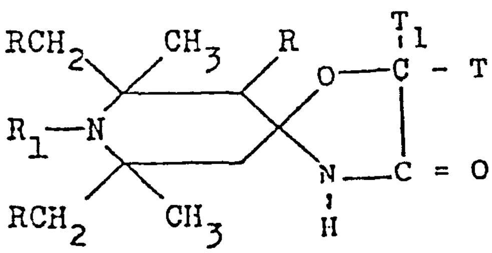

(VB)

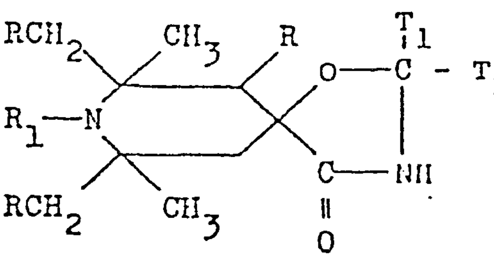

(VC)

dans lesquelles n représente les nombres 1 ou 2; R est un atome d'hydrogène ou un groupe méthyle; $R_1$ est un atome d'hydrogène, un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle ayant 3 à 5 atomes de carbone, glycidyle ou un groupe $-CH_2-CH(OH)-Z$ [dans lequel Z représente un atome d'hydrogène, un groupe méthyle, éthyle ou phényle], et $R_6$ est un atome d'hydrogène, un groupe alkyle ayant 1 à 12 atomes de carbone, allyle, benzyle, glycidyle, alcoxyalkyle ayant 2 à 6 atomes de carbone; et, lorsque n vaut 1, $R_7$ représente un atome d'hydrogène, un groupe alkyle ayant 1 à 12 atomes de carbone, alcényle ayant 3 à 5 atomes de carbone, aralkyle ayant 7 à 9 atomes de carbone, cycloalkyle ayant 5 à 7 atomes de carbone, hydroxyalkyle ayant 2 à 4 atomes de carbone, alcoxyalkyle ayant 2 à 6 atomes de carbone, aryle ayant 6 à 10 atomes de carbone, glycidyle, un groupe de formule $-(CH_2)_m-COO-Q$ ou de formule $-(CH_2)_m-O-CO-Q$ [dans lesquelles m vaut 1 ou 2 et Q est un groupe alkyle ayant 1 à 18 atomes de carbone ou phényle]; lorsque n vaut 2, $R_7$ représente un groupe alkylène ayant 2 à 12 atomes de carbone ou arylène ayant 6 à 12 atomes de carbone, alcénylène ayant 4 à 12 atomes de carbone ou un groupe $-CH_2-CH(OH)-CH_2-O-X-O-CH_2-CH(OH)-CH_2-$ (dans lequel X est un groupe alkylène ayant 2 à 10 atomes de carbone, arylène ayant 6 à 15 atomes de carbone ou cycloalkylène ayant 6 à 12 atomes de carbone) ou un groupe $-CH_2CH(OZ)CH_2-(OCH_2-CH(OZ)CH_2)_2-$, [dans lequel Z est un atome d'hydrogène, un groupe alkyle ayant 1 à 18 atomes de carbone, allyle, benzyle, alcanoyle ayant 2 à 12 atomes de carbone ou benzoyle]; $T_1$ et $T_2$ représentent chacun, indépendamment l'un de l'autre, un atome d'hydrogène, un groupe alkyle ayant 1 à 18 atomes de carbone ou un groupe aryle ayant 6 à 10 atomes de carbone (éventuellement substitué par de l'halogène ou par un groupe alkyle ayant 1 à 4 atomes de carbone) ou aralkyle ayant 7 à 9 atomes de carbone, ou bien $T_1$ et $T_2$; pris avec l'atome de carbone qui les relie, forment un groupe cycloalkyle ayant 5 à 7 atomes de carbone (éventuellement substitué par un groupe alkyle ayant 1 à 4 atomes de carbone), pyrrolidinyle ou pipéridinyle.

7. Utilisation selon la revendication 1 de stabilisants à l'égard de la lumière répondant à la formule (VI):

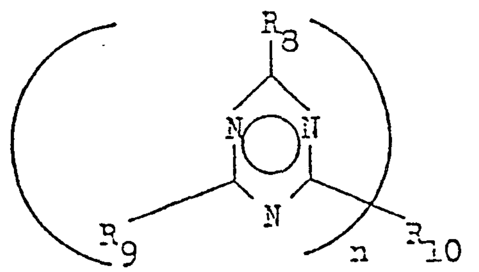

(VI)

dans laquelle n représente les nombres 1 ou 2 et $R_8$ est un groupe de formule:

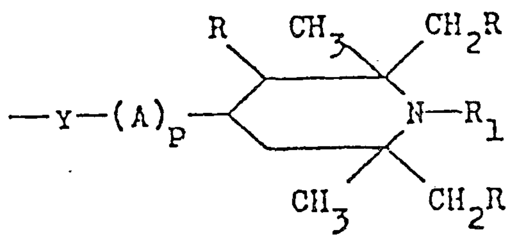

dans laquelle R est un atome d'hydrogène ou un groupe méthyle; $R_1$ est un atome d'hydrogène, un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle ayant 3 à 5 atomes de carbone, glycidyle ou un groupe $-CH_2-CH(OH)-Z$ (dans laquelle Z représente un atome d'hydrogène ou un groupe méthyle, éthyle ou phényle); Y représente -O- ou $-NR_{11}-$; A représente un groupe alkylène ayant 2 à 6 atomes de carbone ou $-(CH_2)_3-O-$ et p représente l'un des nombres 0 ou 1; $R_9$ représente les groupes $R_8$, $NR_{11}R_{12}$, $-OR_{13}$, $-NHCH_2OR_{13}$ ou $-N(CH_2OR_{13})_2$; lorsque n vaut 1, $R_{10}$ représente les groupes $R_8$ou $R_9$ et lorsque n vaut 2, $R_{10}$ représente le groupe -Y-B-Y- (dans lequel B représente un groupe alkylène ayant 2 à 6 atomes de carbone et éventuellement interrompu par $-N(R_{14})-$; $R_{11}$ représente un groupe alkyle ayant 1 à 12 atomes de carbone, cyclohexyle, benzyle ou hydroxyalkyle ayant 1 à 4 atomes de carbone ou un groupe de formule:

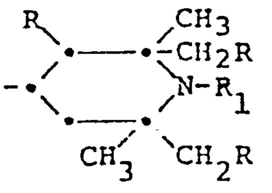

$R_{12}$ représente un groupe alkyle ayant 1 à 12 atomes de carbone, cyclohexyle, benzyle, hydroxyalkyle ayant 1 à 4 atomes de carbone; $R_{13}$ représente un atome d'hydrogène, un groupe alkyle ayant 1 à 12 atomes de carbone ou phényle; et $R_{14}$ représente un atome d'hydrogène, un groupe alkyle ayant 1 à 12 atomes de carbone, cyclohexyle, benzyle ou phényle; ou $R_{11}$ et $R_{12}$, pris ensemble, représentent un groupe alkylène ou oxaalkylène ayant 4 ou 5 atomes de carbone, ou bien $R_{11}$ et $R_{12}$ peuvent aussi représenter chacun un groupe de formule:

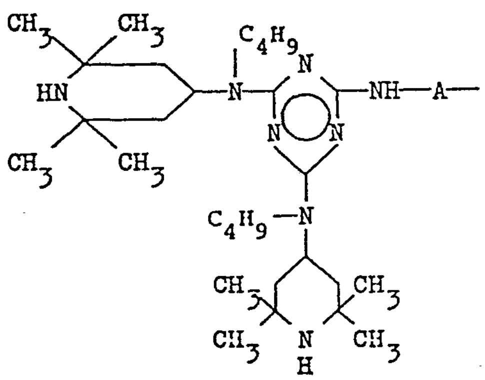

8. Utilisation selon le revendication 1 de stabilisants à l'égard de la lumière, répondant à la formule (VII):

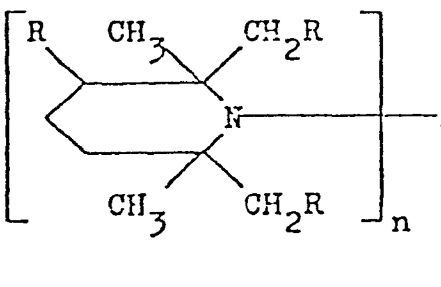

(VII)

dans laquelle n représente l'un des nombres 1 ou 2; R est un atome d'hydrogène ou un groupe méthyle; et, lorsque n vaut 1, $R_{20}$ est un groupe alkyle ayant 4 à 18 atomes de carbone, aralkyle ayant 7 à 12 atomes de carbone, le groupe $-CO-R_{15}$, un groupe alkyle ayant 1 à 4 atomes de carbone et substitué par -CN, $-COOR_{16}$, -OH, $-OCOR_{17}$ [où $R_{15}$ est un groupe alkyle ayant 1 à 12 atomes de carbone, alcényle ayant 2 à 4 atomes de carbone ou phényle; $R_{16}$ est un groupe alkyle ayant 1 à 18 atomes de carbone; $R_{17}$ est un groupe alkyle ayant 1 à 18 atomes de carbone, alcényle ayant 2 à 10 atomes de carbone, cyclohexyle, benzyle ou aryle ayant 6 à 10 atomes de carbone] ou, lorsque n vaut 2, $R_{20}$ est un groupe alkylène ayant 4 à 12 atomes de carbone, butène-2 ylène-1,4, xylylène, le groupe $-(CH_2)_2-OOC-R_{18}-COO-(CH_2)_2-$ ou le groupe $-CH_2-OOC-R_{19}-COO-CH_2-$, où $R_{18}$ est un groupe alkylène ayant 2 à 10 atomes de carbone, phénylène ou cyclohexylène, et $R_{19}$ représente un groupe alkylène, xylylène ou cyclohexylène.

9. Utilisation selon la revendication 1 de stabilisants à l'égard de la lumière, répondant à la formule (VIII):

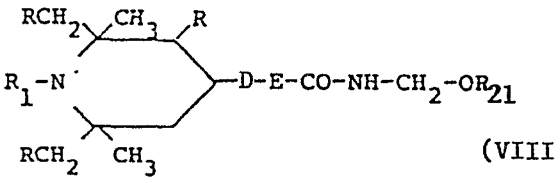

(VIII)

dans laquelle D représente $-N(R_{22})-$ ou -O-; E représente un groupe alkylène ayant 1 à 3 atomes de carbone, le groupe $-CH_2-CH(R_{23})-O-$ [dans lequel $R_{23}$ est un atome d'hydrogène ou un groupe méthyle ou phényle], le groupe $-(CH_2)_3-NH-$ ou une liaison simple; R est un atome d'hydrogène ou un groupe méthyle; $R_1$ représente un atome d'hydrogène, un groupe hydroxyle, alkyle ayant 1 à 18 atomes de carbone, alcényle ayant 3 à 8 atomes de carbone, alcynyle ayant 3 à 8 atomes de carbone, aralkyle ayant 7 à 12 atomes de carbone, alcanoyle ayant 1 à 8 atomes de carbone, alcénoyle ayant 3 à 5 atomes de carbone, glycidyle ou un groupe $-CH_2-CH(OH)-Z$ [dans lequel Z est un atome d'hydrogène ou un groupe méthyle, éthyle ou phényle] et $R_{21}$ est un atome d'hydrogène ou un groupe alkyle ayant 1 à 18 atomes de carbone; $R_{22}$ représente un atome d'hydrogène, un groupe alkyle ayant 1 à 18 atomes de carbone, cycloalkyle ayant 5 à 7 atomes de carbone, aralkyle ayant 7 à 12 atomes de carbone, cyanéthyle, aryle ayant 6 à 10 atomes de carbone, le groupe $-CH_2-CH(R_{23})-OH$, où $R_{23}$ a le sens précité, un groupe de formule:

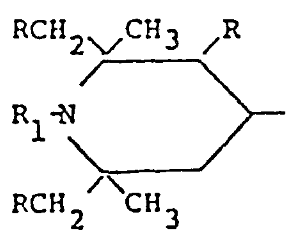

ou un groupe de formule:

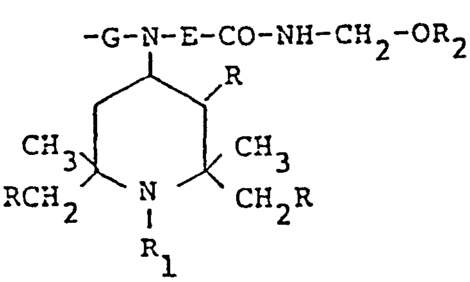

[où G peut être un groupe alkylène ayant 2 à 6 atomes de carbone ou arylène ayant 6 à 12 atomes de carbone] où $R_{22}$ est un groupe $-E-CO-NH-CH_2-OR_{21}$.

10. Utilisation de tétraalkyl-2,2,6,6 pipéridines selon la revendication 1, caractérisée en ce qu'on utilise des oligomères ou polymères dont le motif récurrent contient un radical tétraalkyl-2,2,6,6 pipéridino, en particulier des polyesters, des polyéthers, des polyamides, des polyamines, des polyuréthannes, des polyurées, des polyaminotriazines, des poly(meth)acrylates, des poly(meth)acrylamides et leurs copolymères, qui contiennent de tels radicaux.

11. Utilisation de tétraalkyl-2,2,6,6 pipéridines selon la revendication 1, caractérisée en ce qu'on utilise des composés contenant dans leurs molécules au moins un groupe [hydroxy-2' phényl]-2 benzotriazole ou un groupe hydroxy-2 benzophénone et au moins un groupe tétraalkyl-2,2,6,6 pipéridine.

12. Utilisation selon l'une quelconque des revendications précédentes, caractérisée en ce qu'on utilise un sel d'addition d'acide d'une tétraalkyl-2,2,6,6 pipéridine.

13. Utilisation selon l'une quelconque des revendications 1 à 11, caractérisée en ce qu'on utilise un complexe d'une tétraalkyl-2,2,6,6 pipéridine avec un composé métallique.

14. Utilisation selon l'une quelconque des revendications précédentes, caractérisée en ce qu'on utilise la tétraalkyl-2,2,6,6 pipéridine en une quantité de 0,01 à 5% en poids, par rapport au liant (résine pour vernis ou peintures) sans solvant.

15. Utilisation selon la revendication 14, caractérisée en ce qu'on utilise en outre d'autres stabilisants à l'égard de la lumière, dont la proportion est choisie de manière que la somme de tous les stabilisants à l'égard de la lumière représente 0,02 à 5% en poids, par rapport au liant (résine pour vernis ou peintures) sans solvant.

16. Utilisation selon l'une des revendications 14 ou 15, caractérisée en ce qu'on ajoute comme autres additifs des antioxygènes, des plastifiants, des agents de fluidité ou d'étalement, des accélérateurs de durcissement, des épaississants, des agents de dispersion ou des agents d'amélioration de l'adhérence.

17. Utilisation des tétraalkyl-2,2,6,6 pipéridines selon la revendication 1, caractérisée en ce qu'on utilise comme couche de vernis ou de peinture de couverture un vernis ou une peinture à base de résine acrylique/mélamine.

18. Utilisation de tétraalkyl-2,2,6,6 pipéridines selon la revendication 1, caractérisée en ce que la peinture émail est une peinture ou un vernis pour automobile.